Europäisches Patentamt

European Patent Office

Office européen des brevets

(19)

(11) Publication number: **0 190 734 B1**

## (12) EUROPEAN PATENT SPECIFICATION

(45) Date of publication of patent specification: **27.03.91**  (51) Int. Cl.⁵: **G06K 11/06**

(21) Application number: **86101450.4**

(22) Date of filing: **04.02.86**

(54) Acoustic wave touch panel system.

(30) Priority: **05.02.85 US 698306**
**22.03.85 US 715134**
**06.06.85 US 741975**
**12.07.85 US 755036**

(43) Date of publication of application:
**13.08.86 Bulletin 86/33**

(45) Publication of the grant of the patent:
**27.03.91 Bulletin 91/13**

(84) Designated Contracting States:
**BE DE FR GB IT NL**

(56) References cited:
**EP-A- 0 107 922**
**US-A- 3 883 831**
**US-A- 3 916 099**
**US-A- 3 967 221**

(73) Proprietor: **ZENITH ELECTRONICS CORPORA-
TION**
**Zenith Center 1000 Milwaukee Avenue**
**Glenview Illinois 60025(US)**

(72) Inventor: **Adler, Robert**
**327 Latrobe Avenue**
**Northfield Illinois 60093(US)**
Inventor: **Brenner, Michael C.**
**901 Fair Oaks Avenue**
**Oak Park Illinois 60302(US)**
Inventor: **Fitzgibbon, James J.**
**10 Carol Ann Drive**
**Streamwood Illinois 60103(US)**

(74) Representative: **Baillie, Iain Cameron et al**
**c/o Ladas & Parry Isartorplatz 5**
**W-8000 München 2(DE)**

## Description

This invention relates , in general, to a touch control arrangement for use in graphics display apparatus and, in particular, to a novel arrangement and system for identifying the coordinates of a touch location.

Graphics display apparatus, of the type herein considered, generally utilize a cathode ray tube (CRT), although other types of display devices can be used. In a typical prior art arrangement, each of two adjacent edges of the display surface (faceplate) is provided with a bank of light sources arranged to develop a cluster of parallel light paths which extend across the faceplate, the clusters intersecting, preferably at right angles to form a grid pattern of light paths overlying the display surface. Like banks of light detectors flank those sides of the faceplate opposite the banks of light sources.

In practice, a particular graphic is delivered for display by a controller in response to an operator's command, which command can take the form of a pointing to one area of the faceplate. This pointing serves to interrupt one or more of the light beams, which interruption causes the beam's assigned light detector to develop a signal which is applied to the controller to select a particular graphic. U.S. Patent No. 3,775,560, for example, exemplifies this type of control for a graphics display apparatus. A touch control arrangement of the type adverted to above tends to be rather costly since a separate light sensor is employed for each light source.

It is known to use surface acoustic wave (SAW) energy for touch control. United States Patent No. 3,134,099-Woo teaches an arrangement in which a plurality of piezoelectric transducers, electrically connected in parallel, is disposed along each of two adjacent edges of a sheet of glass. The transducers are coupled to the sheet and, in response to a control signal, create surface waves which propagate across the surface of the glass sheet. A writing pen, embodying a piezoelectric component, is placed in contact with the glass sheet to sense a propagating disturbance and then issue an appropriate signal to a control unit which measures the elasped time interval between the time the control signal was applied to the transducer that initiated the disturbance and the time the signal was received by the pen. It is of significance that, in the Woo arrangement, a plurality of piezoelectric transducers is required for each of two adjacent sides of the glass panel. Further, the Woo system requires the use of a special touch stylus capable of sensing surface acoustic waves traveling across the panel.

United States Patent No. 3,653,031-Hlady, et al is addressed to a touch sensitive position encoder also employing elastic surface wave generating transducers positioned along the edges of a sheet of transparent glass. The transducers function as radiators, as well as sensors, and thus serve to launch surface waves across the glass sheet, as well as to receive such waves. In operation, a finger or stylus placed at a particular position on the glass sheet serves to reflect the surface waves encountered. A reflected wave that is detected is applied to timing circuitry associated with the sensors, which circuitry determines the geometric coordinates of the position of the finger or stylus. Again, as in Woo, two arrays, or banks, of transducers are required to create the surface waves that propagate across the glass sheet.

United States Patent No. 3,673,327-Johnson, et al describes still another SAW-type touch responsive panel assembly comprising a panel positioned over the faceplate of a CRT and having a first plurality of transmitters positioned along a first edge of the panel for generating a like plurality of Rayleigh (surface) beams that propagate across the surface of the panel in an X direction and a like plurality of detectors positioned along the edge of the panel opposite said first edge for individually receiving an assigned one of said plurality of beams. In like fashion, a second plurality of transmitters is positioned along a second edge of the panel, adjacent the first edge, for simultaneously generating a second plurality of Rayleigh wave beams that propagate across the panel in a Y direction, perpendicular to the X direction. A like second plurality of detectors is positioned along the edge of the panel opposite said second edge for receiving an assigned one of said second plurality of beams. Accordingly, to establish this X-Y grid of wave beams, a transmitter is required for each wave beam and a separate detector is required for each such transmitter.

Each transmitter, upon actuation, launches a beam of Rayleigh surface waves along the surface of the panel. Thereafter, when a finger or other object is pressed against the panel, acoustical wave energy is absorbed, thereby interrupting its transmission to its assigned detector. The absence or reduction of the normal signal at a specific detector constitutes a touch indication which is applied to a computer.

However, a principal drawback of the Johnson et al touch control system like that of its optical counterpart, resides in the requirement of a multiplicity of transmitters and detectors to establish the intersecting wave energy paths that form the grid overlying the panel. The mechanical considerations, and cost, involved in the practice of utilizing dual pluralities of transmitters and detectors, all of which must be separately wired, are obvious shortcomings.

Other United States patents in the touch control are are set forth below:

| 3,775,560 | 4,198,623 |
|-----------|-----------|
| 3,808,364 | 4,254,333 |
| 3,916,099 | 4,286,289 |
| 3,956,745 | 4,346,376 |

Additionally, United States patents and literature references in the field of surface acoustic waves which were considered included:

3,883,831

4,403,165

"Use of Apodized Metal Gratings in Fabricating Low Cost quartz RAC Filters" by G.W. Judd and J.L. Thoss. proceedings of the IEEE 1980 Ultrasonics Symposium, p. 343.

The present invention therefore provides a touch panel system for recognizing and responding to touch along a predetermined coordinate axis on the touch surface, said system including surface wave transducer means comprising input and output transducer means, respectively, coupled to the substrate surface and input circuit means associated with said input transducer means for generating surface waves on said substrate surface in a plurality of paths between the input and output transducers, and output circuit means coupled to said output transducer means for detecting the position of a touch on said substrate, characterized in that a touch on said substrate surface damps, in the form of at least a partial absorption of energy, the amplitude of a surface wave propagating through the region of the touch, said system including wave redirecting means coupled to said substrate surface for redirecting surface wave burst components derived from a burst of surface waves produced by said input transducer means across said surface to said output transducer means along a plurality of paths of different lengths which are respectively associated with different positions along said coordinate axis on said touch surface, and said output circuit means being capable of detecting touch-induced amplitude damping of received wave burst components to develop an output signal having a wave-timing-related characteristic indicative of which of said plurality of paths was traversed by the touch-damped wave burst component and thus the location of the touch along said coordinate axis of said surface.

One feature of the invention is that the touch responsive arrangement of the invention is characterized by minimal mechanical and electrical complexity and reduced cost of manufacture.

Further features and advantages of the invention may best be understood by reference to the following description taking in conjunction with the accompanying drawings in which:

Figure 1 illustrates, partially in schematic form, a graphics display apparatus embodying the invention;

Figure 2 is a plan view of the Figure 1 touch responsive display panel depicting, in some detail, reflective grating construction and placement;

Figure 3 is a graphical plot representative of received surface acoustic wave energy traversing one coordinate of the touch panel of Figure 2;

Figure 4 is a graphical plot representative of received surface acoustic wave energy traversing a second, orthogonal, coordinate of the touch panel of Figure 2;

Figure 5 is a schematic representation of a reflection grating and a series of reflected wave components developed by that grating;

Figure 6 illustrates the waveform developed by an output transducer responding to the reflected wave components shown in Figure 5;

Figure 7 illustrates the waveform developed by an output transducer responding to an elongated series of reflected wave components;

Figure 8 is a schematic representation of a rectified version of the output signal of an output transducer employed in a touch panel display apparatus constructed in accordance with the invention.

Figure 9 is a schematic representation of a reflective array in which the pattern of elements results from "finger withdrawal";

Figure 10 is a schematic representation of a reflective array in which individual elements are fragmented in a patterned fashion;

Figure 10A is a schematic representation of a reflective array in which the length of individual elements increases in the direction away from the adjoining transducer;

Figure 11 is a schematic representation of a touch panel arrangement in which a single device is utilized as the input and output transducers;

Figure 12 is a schematic representation of a touch panel arrangement utilizinq an output transducer coextensive with one coordinate of the panel;

Figure 13 is a schematic representation of a touch panel arrangement in which the surface wave reflective grating comprises discrete groups of reflective elements;

Figure 14 depicts the pulse-type waveform developed by an output transducer responding to the burst components developed by the Figure 13 embodiment;

Figure 15 depicts a variation of the waveform shown in Figure 14; and

Figure 16 is a schematic representation of another embodiment of the invention featuring an angular coordinate system.

Figure 17 is a partly schematic representation of the apparatus shown in Figure 1 as modified to cooperate with a preferred form of touch panel control system;

Figure 17a is a block diagram of a touch panel control system for use with the display apparatus shown in Figure 17;

Figure 18 is a representation of a touch control panel for controlling a cursor associated with a remote controllable apparatus;

Figure 19 is a representation of a single coordinate touch control panel;

Figure 20 is a perspective view of a cathode ray tube embodying the invention;

Figure 21a is a partially schematic representation of an alternate embodiment of the invention depicting a touch control panel positioned at a location remote from a controlled image display device; and

Figure 21b is a partially schematic representation of another embodiment depicting a remotely disposed touch control panel associated with controllable apparatus.

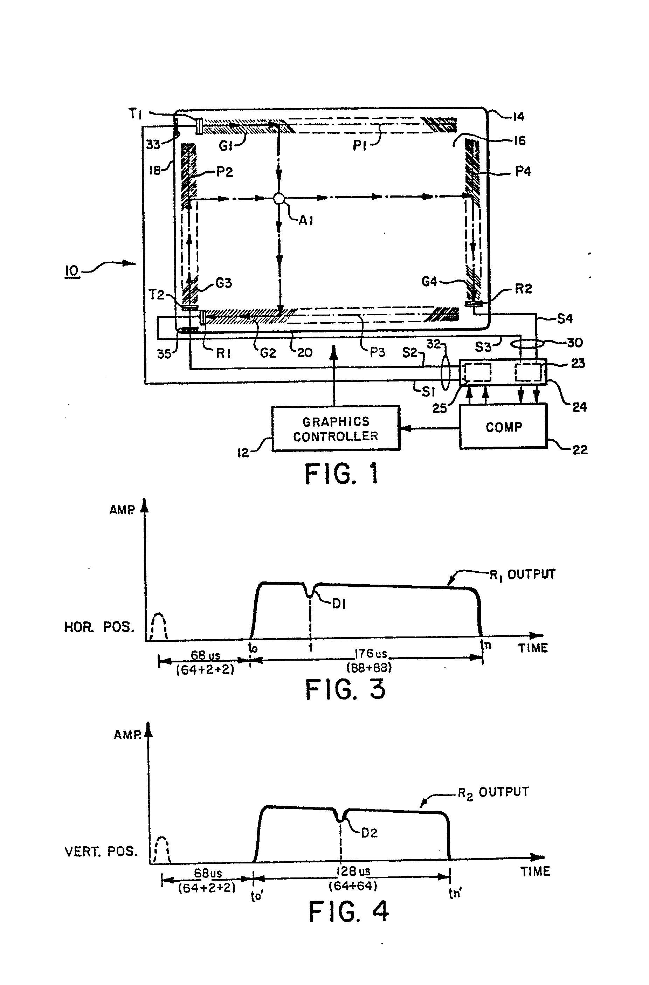

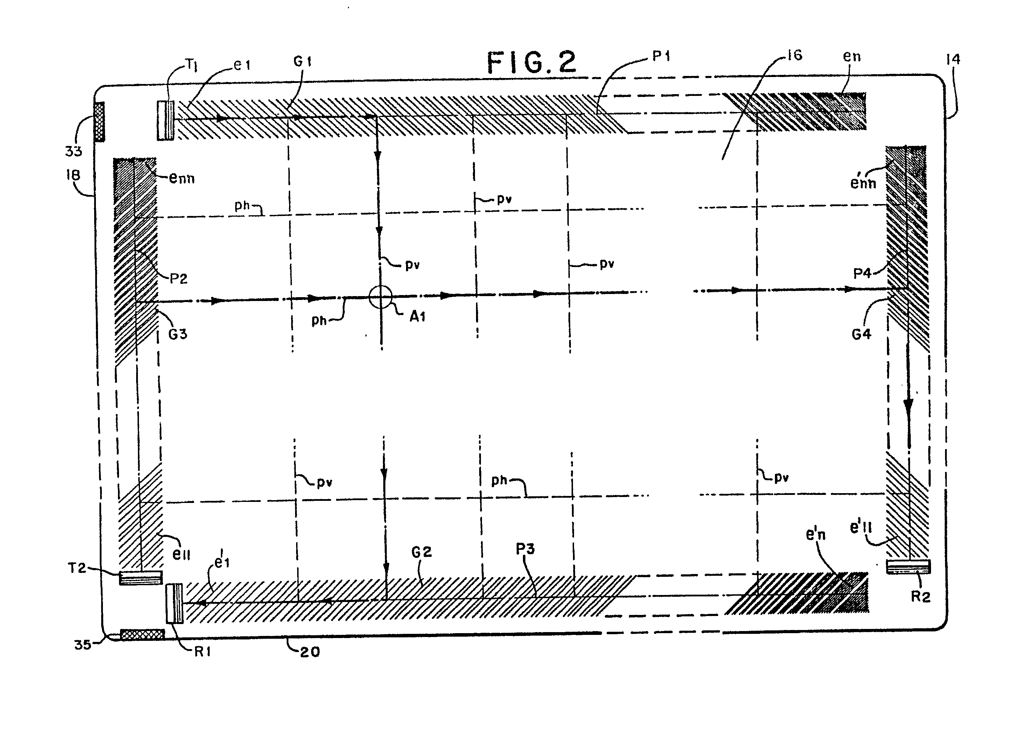

Figure 1 shows a graphics display apparatus 10 comprising a graphics controller 12 and a display device 14 having a display surface 16. A CRT may be employed to display graphics and the subject invention will be described in that environment. However, it is to be appreciated that the invention is readily applicable to other display devices, e.g., electroluminescent or liquid crystal devices, or even displays as simple as an elevator number display, any of which can be employed in lieu of a CRT. In some applications, a separate panel is disposed over the faceplate of the display device.

The faceplate, or panel, is commonly designated a "touch control panel" since graphics, or other information may be ordered up for display from controller 12 in response to an operator's command which can take the form of a touching of a particular area of a menu associated with the touch control panel. The display surface 16, whether it be a CRT faceplate or a separate panel, constitutes a substrate the surface of which is capable of propagating surface acoustic waves. As will be shown, the act of touching serves to interrupt or reduce wave energy directed along one or more paths that form a grid overlying the panel. Detection and anlysis of such interruption serves to identify the X, Y, or other coordinates of the touched area, which information, in turn, is determinative of the graphics to be delivered up for display or other response of the device.

To this end, apparatus 10 further includes a computer 22 for rendering an interface circuit 24 operative in a predetermined sequence so that when a perturbation, or interruption of acoustic wave energy is detected, converted to an electrical signal and fed back to the computer, via interface circuit 24, the location of the interruption is identifiable by the computer. Graphics controller 12 comprises the drive electronics for CRT 14 and, to that end, serves to amplify and otherwise condition the output of computer 22. To achieve its functions, the computer comprises a clock (source of timing signals), a source(s) of video information, as well as sources of horizontal and vertical sync pulses. The output of controller 12 is coupled to the control electrodes of CRT 14, as well as to the CRT's deflection windings, to display, under the direction of computer 22, selected graphics. Accordingly, when the computer identifies the location, or address, of wave interruptions, it will then output the appropriate information to controller 12 to change the video display to graphics associated with the address touched by the operator.

As shown in Figure 1, interface circuit 24 has input terminals coupled, via a buss 30, to receiver transducers R1, R2 and output terminals coupled to transmitter transducers T1, T2 via the buss 32. Circuit 24 had additional input and output terminals coupled to computer 22 for interacting therewith. Circuit 24, in response to timing signals from computer 22, outputs firing signals that stimulate transducers T1, T2 in a time sequence so that the location of a subsequent interruption of a surface wave is identifiable.

Input transducers T1, T2, which are more particularly described below, are mounted upon subsstrate surface 16 adjacent to edges 18 and 20, respectively, of Figure 2. A source 25 in interface circuit 24 serves to apply input signals S1, S2, via buss 32, to respective transducers T1, T2, which transducers, in response thereto, individually launch a burst of acoustic surface waves along first and second paths P1, P2, respectively on surface 16.

Also as shown in Figure 2, first and second output transducers R1, R2, are mounted upon substrate surface 16 adjacent to respective edges 18, 20 that is, the edges close to their associated input transducer T1, T2. In a manner to be detailed below, transducers R1, R2, upon receipt of the surface waves launched by their associated input transducers develop respective output signals S3, S4 which, upon analysis, will exhibit a characteristic of the launched surface wave, e.g. a change in amplitude, attributable to a perturbation of a received surface wave burst.

A first reflective grating G1 comprising an array of reflective elements el-en is disposed along path P1 with each of the aforesaid elements effectively arranged, preferably, at like angles of incidence to the longitudinal axis of path P1. Desirably, the angles of incidence of the reflective elements, relative to the axis of path P1, are approximately 45 degrees, Additionally, the longitudinal axis of path P1 is preferably disposed parallel to the upper edge of substrate surface 16, as viewed in Figures 1 and 2.

Reflective elements el-en serve to extract from the initially launched surface wave burst a multiplicity of wave components and to direct such wave burst components across substrate surface 16 along a like multiplicity of paths pv each disposed at an angle to the axis of path P1. As depicted in Figures 1 and 2, these multiplicities of paths are each disposed at 90 degrees to the axis of path P1.

A second reflective grating G 2 likewise comprises an array of reflective elements e'l-e'n which are disposed along path P3 and are effectively arranged at like angles of incidence to the longitudinal axis of path P3 for intercepting the wave components extracted from the wave traversing path P1 and directed across substrate surface 16 along the paths pv. Grating G2 intercepts the wave burst components arriving along paths pv and redirects them along path P3 toward re ceiving transducer R1 which converts the wave energy in a received burst to an electrical output signal S3. In a fashion complementary to that of the first reflective grating G1, the elements of grating G2 are disposed at 45 degrees to the longitudinal axis of path P3 to facilitate interception and redirecting of wave components arriving from grating G1.

The above-described transducer pair T1, R1 and gratings G1, G2 serve to establish one portion of a grid of surface wave burst paths pv which are disposed across substrate surface 16. A second portion of that grid is established by a second pair of transducers T2, R2 and associated gratings G3, G4. In a manner similar to that described above, transducer T2, in response to a firing signal S2 from source 25 in interface circuit 24, launches a burst of acoustic surface waves along the path P2, which path is disposed perpendicular to the previously described paths P1, P3. The third reflective grating G3 comprises an array of reflective element ell-enn which are disposed along path P2 with the elements effectively arranged at like angles of incidence to the axis of path P2. Grating G3 serves to extract from the surface wave launched by transducer T2 a multiplicity of wave burst components and to direct such wave burst components across substrate surface 16 along a multiplicity of paths ph each disposed at a 90 degree angle to the axis of path P2.

A fourth reflective grating G4, comprising an array of reflective elements e'll-e'nn is disposed along path P4, each element being arranged at a 45 degree angle to the longitudinal axis of path P4. The reflective elements of grating G4 intercept the wave components directed thereto by the elements of grating G3 along paths ph and redirect these intercepted wave burst components along path P4 to receiving transducer R2.

Since transducers T1, T2 additionally launch surface acoustic waves along paths P1, p2 in directions opposite from their respective adjoining gratings G1, G3, it is desirable to provide means for arresting such wave energy. Accordingly, a pair of absorbers 33, 35, which can be formed of a soft epoxy, are mounted upon the display surface immediately behind respective transducers T1 and T2.

In the manner just described, and as depicted in Figure 2, display surface 16 is now provided with an overlying grid comprising a multiplicity of intersecting paths of acoustic surface wave bursts which surface waves are confined to predetermined paths, one series ph being disposed parallel to what may be termed the horizontal or major axis of display surface 16 while a second, intersecting series of paths pv are disposed parallel to the vertical or minor axis of the display surface. In this fashion intersecting wave energy paths traverse the surface of the display device, forming a grid that overlies display surface 16.

As described above, means, in the form of interface circuit 24 and buss 32, are coupled to the input transducers T1, T2 for initiating the launching of bursts of surface waves along paths P1, P2. The application of signals S1, S2 to transducers T1, T2 serve to generate and launch across surface 16 elastic (ultrasonic) surface waves having a substantially planar wavefront with uniform amplitude and phase along lines parallel to the initiating transducer. Transducers T1, T2, (as well as R1 and R2) typically, are piezoelectric transducers comprised of a lead zirconate-titanate ceramic mounted upon a prism of lower velocity material, e.g., Lucite, which effects an efficient electro-mechanical coupling to substrate surface 16.

The generated surface waves launched along paths P1, P2 are eventually received by transducers R1, R2, respectively, and converted to electrical signals S3, S4. Means comprising a signal processing circuit 23, included in interface circuit 24, see Figure 1, is coupled to the outputs of receiving transducers R1, R2 for determining, by an analysis based on the transit time of the perturbed surface wave burst, which of paths ph, pv the touch-perturbed wave traversed and thereby establish the location of the touch along two coordinates of the display surface. In one coordinate system, for example, in order to identify the X coordinate for the location of the path of a perturbed wave burst along the horizontal axis, as viewed in Figure 2, the determining means is arranged to make a time analysis of the surface wave burst received by transducer R1. To this end, the determining means analysis commences at the instant input signal S1 is applied to transducer T1 to launch a surface wave. On the time scale of Figure 3 there is plotted the earliest time an acoustic wave burst from transmitter T1 could arrive at receiver R1.

Assuming that the dimensions of the grid overlying display surface 16 are approximately 20.3cm x 27.9cm (8" x 11"), and assuming further that the transit time required for a surface wave burst to reach the first reflective element e1 on path P1 is approximately 2 microseconds, as is the transit time required for the surface wave burst to travel to receiver R1 from element e'1; to this is added the transit time of the surface wave from reflective element e1 across the display surface 16 to element e1, which is approximately 64 microseconds. Accordingly, the detector will ignore any disturbance arriving within the first 64 microseconds immediately following the triggering of transmitter T1. Assuming for the moment, that no disturbance or perturbation of the instant surface wave launched by T1 is experienced, the output of transducer R1 might exhibit the solid line response shown in Figure 3. Depicted therein is a waveform having a relatively constant amplitude extending for approximately 176 microseconds. This response is established by virtue of the fact that for a period commencing at to surface wave energy is continually received by the detector R1 for 176 microseconds that is until time tn. The 176 microsecond interval is the approximate time required for a surface wave to traverse the entire length of reflective grating G1 and return along the length of reflective grating G2. In the absence of a perturbation the output of receiver transducer R1, when analyzed by interface circuit 24, will supply a signal to computer 22 which is indicative of the fact that an uninterrupted burst of surface waves traversed substrate surface 16 without interference. The computer relays this information to controller 12 which, in turn, maintains the graphics display on the CRT undisturbed.

Assuming now that an operator wished to select a graphic other than that being displayed. A menu, such as a chart or other type of directory, would indicate which particular area of display surface 16, should be touched to call up the desired graphic. Accordingly, assuming that the particular area is that designated A1 in Figure 2, the operator then inserts his finger into the grid of intersecting surface waves by touching the display surface at A1, which action causes a portion of the acoustic surface wave energy traversing the touched area to be absorbed. This act of touching is best explained, and manifested, by reference again to Figure 3 which depicts the effect upon the output waveform of R1 attributable to a perturbation of the surface wave traversing the display surface in the vicinity of area A1. This effect is manifested in the waveform as a dip D1 along the time axis which corresponds to the point where the operator touched the panel. Let us assume that the point of touch occurred approximately one-fourth of the distance along the major axis of the display surface commencing from the left side, as viewed in Figure 2. As previously noted, it was assumed that the time entailed for a surface wave to travel the length of grating G1 was 88 microseconds. One-fourth of that time would be 22 microseconds. Adding to that number the 64 microseconds required for the wave to traverse the paths parallel to the minor axis of the surface, the 22 microseconds entailed in traversing a corresponding portion of array G2, and finally adding the 4 microseconds (2 + 2) initial and terminal transit times, the detector, output waveform would indicate that a perturbation of the wave burst transmitted by T1 and subsequently received by R1, occurred approximately 112 microseconds (2 + 2 + 64 + 22 + 22) after the transmitter T1 launched the surface wave under consideration. This 112 microsecond interval is analyzed by computer 22 which informs the controller 12 that a perturbation was detected by receiver R1 at a particular instant in the time domain.

Preferably, a short time later, a surface wave burst is launched by transmitter T2 and reflected by gratings G3 and G4 to return the components of that wave to receiver R2. In the manner described above with reference to a perturbation detected by R1, the surface wave components now traversing a path ph parallel to the major axis of the display surface are detected by R2 which establishes, in like fashion, the occurrence and time when the aforementioned perturbation of the wave, manifested in Figure 4 as dip D2, was experienced along the Y-axis. Applying this time-related information to that developed relative to the other axis, the computer informs controller 12 of the coordinates of the perturbation (touching A1) so that the controller may deliver for display upon the CRT screen the particular graphics associated or assigned to the location at which the touching occurred.

It is recognized that simultaneous operations to identify both coordinates are possible, but the preferred mode of operation is to alternate between the two. The latter practice eliminates crosstalk problems and makes it possible to economize by switching certain circuit elements (e.g. a tuned amplifier) between coordinate identifying channels, instead of duplicating such elements.

In an embodiment successfully reduced to practice the above-described gratings G1-G4 were formed by resort to a silk-screening technique in which a frit (solder glass) material was deposited in the pattern depicted in Figure 2. More particularly, the actual configuration and spacing of the grating element pattern was computer generated utilizing the finger-withdrawal method. Consider first a basic reflective linear array comprising a multiplicity of surface wave reflecting fingers (elements) of equal width, equally spaced and collectively disposed at 45 degrees to the longitudinal axis of the path they define. Desirably, the spacing, or pitch, between adjacent elements should be one wave length of the frequency of the burst of acoustic waves launched by the transmitting transducer. An acoustic wave traversing such an array in which the reflecting fingers are uniformly spaced will experience an exponential attenuation of power with distance so that little, if any, acoustic wave energy is available for reflection at the terminus of the array. Moreover, a uniform array of the type adverted to results, of necessity, in exponentially decreasing power density with distance in the reflected acoustic wave components directed across the display surface. In other words, the power density of the initially reflected wave components will be significantly greater than that of subsequently reflected wave components. Desirably, the reflected wave components traversing the display surface should be characterized by a substantially constant power density, as graphically depicted in Figures 3 and 4, otherwise those plots would depict an exponentially decreasing amplitude.

The desired constant power density of the reflected waves is achieved, in an execution that has been reduced to practice, by a patterned deletion of a grating's reflective elements in which the percentage of deleted elements decreases gradually from the launch point to the terminus of the grating. This results in a progressively increasing coefficient of reflectivity culminating in the sought for constant power density.

A reflective grating tailored for the abovementioned execution was designed from an initial array of approximately 300 equally spaced elements having a pitch (in the direction of wave propagation) of one wavelength of a four MHz acoustic wave. In practice elements are selectively deleted to the end that the spacing between remaining adjacent elements in the grating is a multiple of the above-mentioned one wavelength. In the subject execution array elements were selectively deleted in accordance with the following formula:

$$P = \frac{C-1}{C \exp\left(\frac{x}{L}\right)^{-1}}$$

In the above expression, P is equal to the density of elements at coordinate x, where x is the distance measured from the far end of the array back toward the launch end. When x equals zero, element density is unity, which is the case for a uniform array with no elements deleted. C and L are constants, the values of which are determined by recourse to experimental data and depend upon the material properties of the display panel and the reflective elements, the length, width and thickness of the reflective elements, etc. The resulting grating comprised an array of approximately 130 elements having a pattern determined by the above formula and in which individual elements were 18mm (.7") long and 0.3mm (.011") wide.

Having described a preferred embodiment of the invention, a number of the principles underlying the invention and variants of the preferred embodiment will be discussed. Whereas the preferred embodiment of the invention is illustrated as providing for touch position detection in Cartesian coordinates, it should be understood that the principles of the invention are applicable in devices having angular or other coordinate systems, or in devices having a single coordinate axis.

The preferred embodiment has been described in the context of a system for launching a burst of surface waves into a reflective array or grating from which is derived a plurality of burst components. The array redirects these components across the display surface. In a broader sense, the invention may be thought of as surface acoustic wave scanning means including input surface wave transducer means coupled to a surface wave propagating substrate for scanning the surface in the direction of the coordinate axis with a timed succession of surface wave bursts directed in substantially parallel paths across the surface transversely to the said coordinate axis. The plurality of paths are respectively associated with different positions along the coordinate axis of the display surface. As the touch position information is developed by timing the surface wave burst component which is perturbed, the starting time of each of the succession of surface wave bursts which are directed across the panel must be carefully controlled. In the aforesaid preferred embodiment, the timing is inherent in the propagation velocity of the surface wave burst as it travels through the reflective grating. Other embodiments are contemplated wherein the launching of the bursts of surface waves or wave components along parallel paths across the panel is determined by other than the natural propagation velocity of surface waves on the display surface. For example, in the embodiment wherein a reflective array such as is shown in Figure 2 is used to launch the surface wave burst components across the panel, the reflective array may be formed on a separate strip composed of a material having a different wave propagation velocity, such as a different glass or a metal, which is adhered to the display surface. Care must be taken to insure an efficient transition of the waves from the reflective grating onto the display surface, as by feathering the interfacing edge of the strip. The wave reflective array may be formed on a separate strip for other reasons also, such as ease or economy of manufacture.

In a broad sense, the invention may also be thought of as an absorption ranging system, quite unlike the above-discussed reflection-type ranging system shown in the aforementioned United States Patent No. 3,653,031. In the present invention, the absence of wave energy or the presence of wave energy at a reduced level, as results when a finger, or a stylus reasonably capable of absorbing acoustic surface wave energy, damps the amplitude of a surface wave burst propagating through the region of the touch, is sensed and the timing of that information is utilized to determine which of the plurality of burst propagation paths has been perturbed, and thus the location of the touch. One will note that in the preferred embodiment, the time required for the surface wave burst components to propagate across the panel is constant for all burst paths. However, the time required for the surface wave burst launched by the input transducer to propagate to the point at which it is again redirected across the panel, and from the point at which it is redirected to the output transducer, varies along the coordinate axis along which the touch may occur. It is this varying distance, and the surface wave propagation time associated therewith, which is used in the present invention to locate the position of a touch along the coordinate axis.

Unlike prior art systems which have a fixed number of emitters along one side of the touch panel and a corresponding fixed number of detectors along the opposed side thereof and which detect the position of a touch by determining which of the emitter-detector pairs have been triggered, the present invention teaches the formation of a continuous succession of surface wave bursts which sweep across the panel and develop at the output an analog output signal. With the present invention, a touch panel system designer has a free choice, by detection circuit design, to pick touch panel specifications conforming to the specifications of a device driven by the display -- a computer, for example -- without making mechanical changes. This subject will be treated at length below.

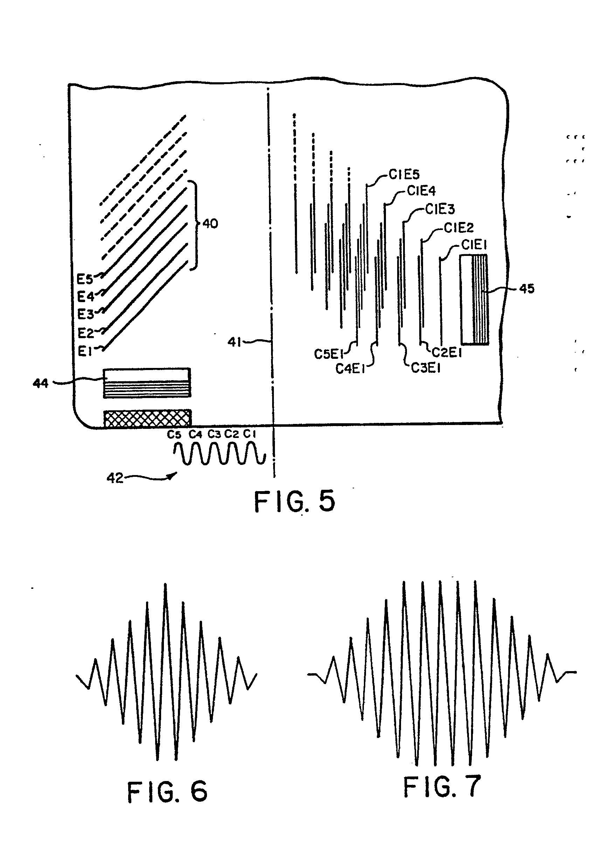

Figure 5 will further an understanding of certain principles underlying the present invention, and certain desired optimizations. Whereas other means may be devised for redirecting a burst of surface waves launched by the input transducer across the display surface, as in the preferred embodiment described above, Figure 5 shows a reflective grating 40 for this purpose. The grating is shown as comprising reflective elements E1, E2, E3, E4, and E5 arranged in the direction of the touch coordinate axis 41. In practice, the grating would comprise additional elements as shown in Figure 2, however, in the interest of clarity of illustration, only five elements are shown. An input signal 42 for application to the schematically represented input transducer 44 is shown as comprising a five cycle signal burst, here depicted as a sine wave having cycles C1, C2, C3, C4 and C5.

Application of input signal 42 to the input transducer 44 results in a burst of equal-amplitude surface waves from the transducer 44. The wavelength of the cycles C1-C5 is selected to be equal to the period of the grating 40. The first cycle C1 of signal 42 generates a first surface wave which is partially reflected from the first element E1 of grating 40, here shown by way of example as being oriented at 45 degrees to axis 41. The reflected surface wave propagates at 90 degrees to the direction of travel of the launched surface wave. The first reflected surface wave is labeled in Figure 5 as C1E1, signifying the first surface wave developed by input signal cycle C1, as reflected from grating element E1.

The same first wave reflected from grating element E2 is shown in Figure 5 at C1E2. The surface waves reflected from elements E3-E5 are labeled C1E3, C1E4 and C1E5, respectively. Similarily, the second cycle C2 of the input signal 42 develops a second surface wave which lags the first surface wave by one period, producing a second pattern of surface waves of exactly the same configuration as the pattern of waves produced by the first cycle C1 of the input signal, but lagging in time by one cycle. Similarly, input signal cycles C3-C5 produce three more surface wave patterns. Thus, the application of input signal 42 results in a burst of surface waves from the input transducer 44 which propagate through the reflective grating 40. A plurality of surface wave burst components are derived from the grating 40 which propagate across the display surface. As used herein, C1E1, C2E1, C3E1, C4E1, C5E1 constitutes one burst component. Another would be C1E2, C2E2, C3E2, C4E2, C5E2. It is preferred that the burst components be heavily overlapped to produce at the output a smooth analog signal, as will be discussed at length below.

The output developed by an output transducer 45, positioned as shown in Figure 5, will take the form shown schematically in Figure 6 wherein the amplitude of the detected signal will rise to a peak and then decay to zero. This can be easily understood from Figure 5 wherein it can be seen that the burst of surface waves is led by single wave C1E1, which is followed by a double wave C1E2, C2E1 in turn followed by a triple wave, and so on. After the peak is reached, the number of surface waves which add at the output progressively decreases until the burst has passed and the detected wave energy falls to zero.

It has been discovered that if signal/noise ratio is considered, there exists an optimum relationship of surface wave burst length to input transducer width (or more precisely, width of gratings G1, G2 etc.). specifically, in a preferred execution of the present invention, the duration of the input surface wave burst ("T") emerging from the input transducer should be in the range of 1.0 w/c to 2.0 w/c where "w" is the above-mentioned width and "c" is the velocity of propagation of surface waves on the conducting substrate.

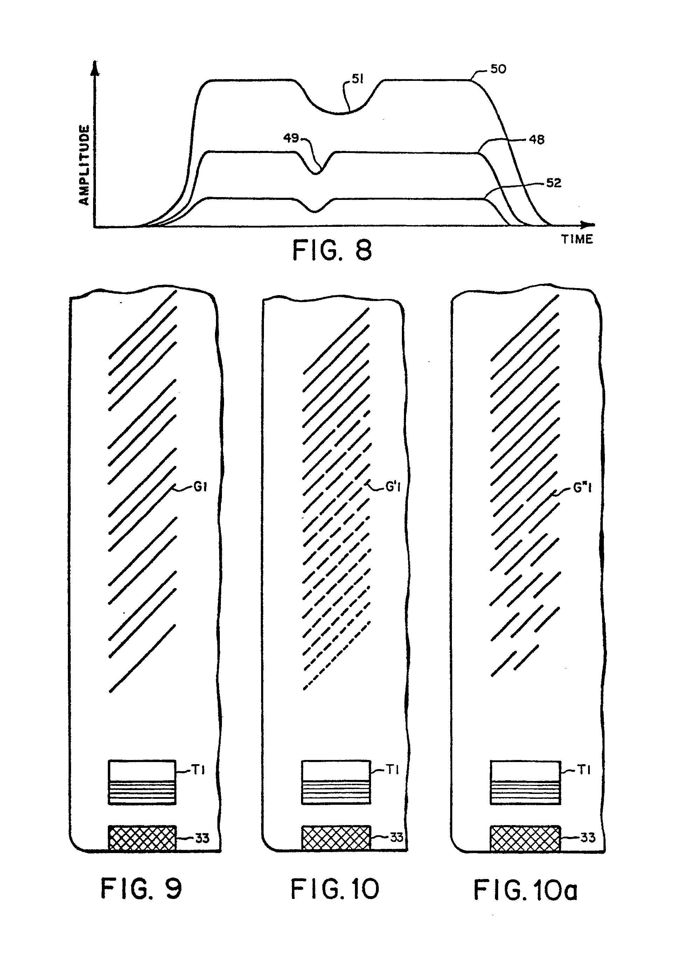

The implications of the above can be better understood by reference to Figure 8 which is a highly schematic representation of a rectified version of the wave form of a signal which might be produced at the output of the output transducer in touch panel display apparatus according to the present invention. Figure 8 is a schematic illustration corresponding to Figures 3 or 4 discussed above. Using an optimized configuration, as described above, an output signal 48 results in which the amplitude dip 49 resulting from a damping of a burst of surface waves in a particular burst path has substantial amplitude. The signal to noise ratio of the signal 48 is adequate. The dip 49 in the waveform of the rectified signal 48 corresponding to the detected damping of the wave has a well-defined bottom which can be located with extreme precision, as will be discussed below. If the length of the input burst of surface waves is substantially above the optimum range, the output transducer will develop an output signal having an envelope with an excessively elongated trapezoidal shape, as shown schematically in Figure 7. In Figure 8, the waveform 50 represents the type of rectified output which would result -- namely an output signal having a dip 51 associated with the perturbation which has a poorly defined bottom and thus poor touch resolution. Conversely, if the input burst of surface waves (the duration of the input signal 42) is significantly shorter than the optimum length, a weak signal will result such as shown in Figure 8 at 52, with lower signal-to-noise ratio and thus a signal whose reliability and touch resolution is poor. It is the signal-to-noise ratio of the signal developed at the output transducer which determines the limiting touch resolution in the present system.

By way of example, the spacing of the grating elements and the wavelength of the surface waves which make up the surface wave bursts may, for example, be 0.8mm (.030"). In determining the optimum input burst length in accordance with the present invention, one factor which must be taken into account is the distance the surface waves will travel across the panel without significant spreading due to diffraction effects. As a rule of thumb, a surface wave will propagate from its launching transducer a distance roughly equal to the square of the width of the transducer, measured in number of wavelengths, without excessive spreading. By way of example, to launch a surface wave across a 4.57cm (fifteen inch) wide panel, the input transducer should be about twenty-four wavelengths wide. Assuming a 0.8mm (thirty mil) wavelength, the surface wave burst will travel approximately 576 wavelengths or about 43.2cm (seventeen inches) before significant spreading occurs. In practice, however, it has been found that for a 4.57cm (fifteen inch) panel width, the transducer need only be about 16 wavelengths 1.22 cm (.48 inches) wide; this favorable finding is explained by the simultaneous action of two gratings (e.g. G1 and G2), in determining the wave paths across the display surface Now, if the surface wave velocity on the display surface 3.0mm (120 mil) per microsecond (= 3000 meter/ second), then w/c equals 4 microseconds, and consequently the optimum burst duration is between 4 and 8 microseconds, corresponding to the range of 16 to 32 cycles. The frequency corresponding to these figures, determined by the quotient of velocity c and wavelength, equals 4 Megahertz.

It is important to note that with bursts as long as 32 cycles passing through the grating, maintaining the correct relationship between the transmitted frequency and the mutual spacing S of the reflecting strips is important. In the embodiment described so far, the strips are oriented at 45 degrees to the direction of the incident wave, and the proper spacing for this case is one wavelength or an integral number of wavelengths; the correct frequency is $f = \frac{c}{S}$ or an integral multiple thereof, and the transmitted frequency should be very close to the theoretical value; for shorter bursts, i.e. those containing fewer cycles, frequency tolerance is proportionately wider. Power reflectivity, to be defined later, must also be determined at the correct frequency. For the same reason, it is important that the chosen value of S be accurately maintained constant along the entire grating, with the exception that integral multiples of S are allowed.

As intimated above, the present invention is distinguished from other touch panel systems, in its preferred form, in its particular utilization of an analog output signal. In accordance with an aspect of this invention, circuit means are provided which are coupled to the input and output transducer means for initiating a timed succession of surface wave bursts, or burst components, on the display surface and for detecting touch-induced perturbations of received wave bursts, the circuit means including means for rectifying the output from the output transducer means to develop an electrical characterization of the perturbation and for developing an output representing the timing of said characterization of said perturbation. From that output, it is determined which of the plurality of paths was traversed by the touch-perturbed wave burst and thereby the location of the touch along the coordinate axis of the display surface.

A number of arrangements are contemplated for analyzing the output signal to determine the timing of the wave burst perturbation. In a preferred embodiment, means are provided for sampling the amplitude of the rectified output from the output transducer at a plurality of time spaced points. Means are provided for storing the amplitude samples for future reference. During a touch of the display surface, means are provided for again sampling the amplitude of the output transducer output and comparing the developed touch-related amplitude samples with the stored reference samples. Means are provided for developing a signal representing the point of greatest difference, or if desired the greatest ratio, between the amplitudes of the reference samples and the touch-related samples and thus the timing of the touch-perturbed wave burst.

As mentioned above, a designer utilizing the present invention has a free choice in tailoring the touch panel specification to the standards of a device driven by the panel. That is, the sampling means can be adjusted and designed to sample at any selected time interval to correspond to the standards of the driven device. For example, if the touch panel apparatus drives a computer, the sampling frequency may desirably be selected to correspond to every character or every other character for which the computer is programmed. Typical computers today have 640 matrix points along a horizontal line, corresponding to 80 characters. One would like to have touch resolution elements that have some integral relationship to the number 640, if the driven computer has 640 horizontal matrix points. There is nothing inherent in the output signal developed in accordance with the present invention that needs to be changed if one wishes to drive a computer having, instead, 512 matrix points (64 characters) along its horizontal axis. All that is required is that the timing of the electronic sampling signal be changed. This is not true of prior art fixed emitter systems because they cannot readily be changed to meet a different standard. Thus, in such prior art systems, a physically different touch panel would have to be provided for every standard desired to be met. With the present invention, only the timing of the sampling signal need be changed to accommodate a variety of different standards in the driven devices.

Yet another approach to analyzing the output from the output transducer to determine the timing of the perturbed wave burst is to provide differentiating means for differentiating the rectified output of the output transducer means. The zero crossing of the resulting signal represents the timing of the touch-perturbed wave burst. While the differentiating approach has the advantage that relatively inexpensive electronics can be utilized, the gratings employed in such a system must be very carefully tailored to insure that the burst components issuing from and intercepted by them will enable the output transducer to produce a substantially flat output signal. Moreover, the differentiating approach is vulnerable to interpreting the presence of a contaminant (e.g., grease on the display surface) as a "touch".

The above described preferred embodiment (Figure 2) is shown as having reflective gratings G1, G2, G3 and G4, the elements of which are non-uniformly spaced. As already noted, in a practical embodiment this is desirable since a grating whose elements are uniformly spaced would reflect uniformly and thus produce an exponential fall-off in radiated power along its length. That is to say, if for each unit of length along the fixed grating, a fixed percentage of the power incident thereupon is radiated sideways, a smaller residue of power remains. If the same fixed percentage of that power is radiated in the succeeding section, it can be seen that the power decreases in a geometrical progression.

By way of review, desirably, a flat response such as is shown in Figures 3, 4 or 8 is preferred. In accordance with an aspect of this invention, the reflectivity of the reflective elements constituting the reflective grating or gratings which adjoin the input transducer is weighted such that the initial elements have a relatively low reflectivity and the succeeding elements have increasing reflectivity. Stated in another way, the reflective array has an increasing coefficient of reflection in the direction away from the adjoining transducer so as to compensate for the fall-off in wave amplitude which results from the continuing diversion of wave energy into paths across the panel. It should be understood that the reflective array adjoining the input transducer should have increasing reflectivity in the direction of wave propagation, but for the array adjoining the output transducer, the array should have a corresponding decrease in reflectivity in the direction of wave propagation. Thus, in both cases, the reflectivity should increase in the direction away from the adjoining transducer. This desirable attribute is realizable in the Figure 2 embodiment by virtue of the depicted non-uniform spacing of the reflective elements constituting each of gratings G1-G4.

For perfect uniformity of the transversely radiated surface wave power, and assuming no power loss by dissipation anywhere in the array, the power along the array must decrease linearly with distance. For this to occur, the power reflectivity must increase inversely with the distance remaining to the point beyond the array where the linearly decreasing power would drop to zero. (As used herein, reflectivity is the fraction of the longitudinally incident power diverted transversely per unit length.) In other words, power reflectivity K must increase with the distance x from the transducer in accordance with

$$K = \frac{1}{G - X + 1/Ke}$$

where Ke is the maximum reflectivity actually used at the far end where $x = G$, the symbol G representing the length of the grating. Note that K and Ke have the dimension of a reciprocal length (fraction of power diversion per unit length).

There are a number of ways the reflectivity of the grating can be increased in the direction away from the adjoining transducer so as to flatten out the output waveform of the output transducer. One way would be to increase the thickness of the reflective elements in the direction away from the adjoining transducer, as the power reflectivity is proportional to the square of the thickness of the reflective elements. This could be done, in theory, by screen printing or etching (where grooves are used), however in practice this approach might prove to be difficult to execute.

A second, more practical, approach is to remove selected ones of the reflective elements in accordance with a formula which yields the desired increase in reflectivity along the array. See Figure 9, also Figure 2 and the earlier discussion concerning tailoring a reflective grating. For example, if one wished to cover a range of power reflectivity variation of 9 to 1 (an amplitude ratio of about 3 to 1), one would eliminate two of every three strips at the beginning of the array. Strips would be gradually added (fewer strips eliminated) along the length of the array until at the end of the array, no strips would be eliminated. This is a practical method and has been reduced to practice successfully.

Yet another method involves weighting the reflectivity of each of the individual reflective elements as shown schematically in Figure 10 by fragmenting individual elements of an array G'1. The elements have greater interruptions (which may be produced according to a random formula) at the end of the array nearest the transducer (input or output) than at the opposite end of the array.

In yet another embodiment (Figure 10A), the reflective array G"1 has array elements whose individual length increases in the direction away from the ad joining transducer and whose individual position in a direction along the length of the element is varied within the side boundaries of the array. With all these methods, the reduction in element length $\rho$ corresponds to an equal reduction in amplitude of the reflected burst, and the power reduction, above referred to as K/Ke, equals $\rho^2$.

The same technique can be used, that is, weighting the reflective elements according to a prescribed reflectivity shading formula, to compensate for energy dissipation in the reflective array or other factors for which compensation may be desirable. The equation previously mentioned in connection with the preferred embodiment allows for uniform dissipation. Various other applications of the principles of the present invention will now be discussed.

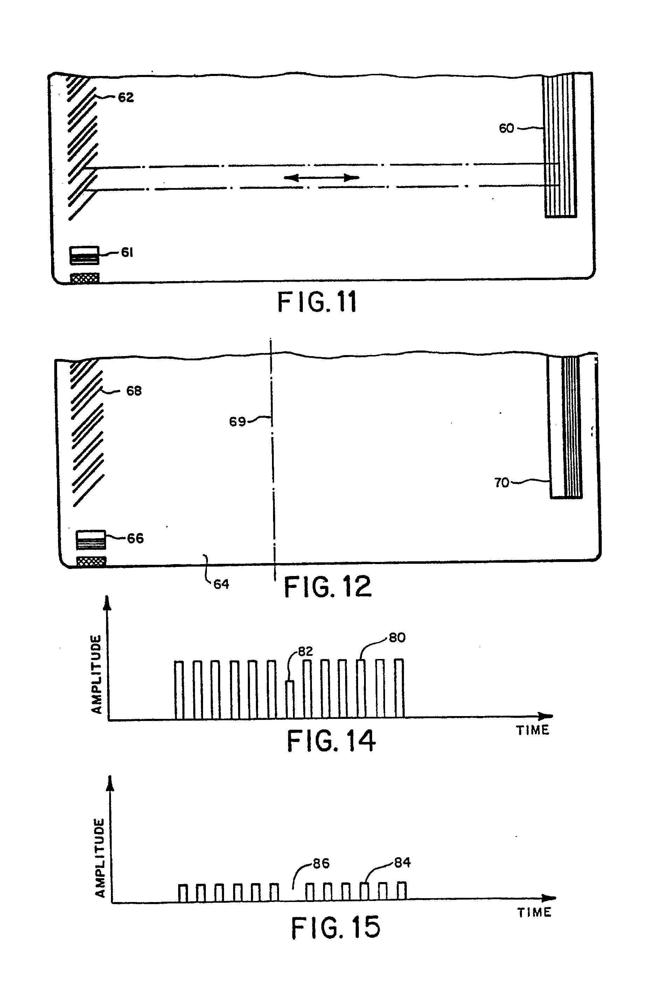

Whereas the preferred embodiment is described as having separate input and output transducer means and means redirecting a burst of surface waves launched from an input transducer to a different output transducer, it is contemplated that the input transducer may also be the output transducer. See Figure 11 wherein a reflector 60 is employed to reflect the waves launched by the common input/output transducer 61 back across the panel where they are redirected by a grating 62 back to the input/output transducer 61.

The reflector 60 may consist of a series of half-wavelength spaced reflecting elements -- either raised or depressed grooves -- as is well known in the surface wave art.

Figure 12 illustrates yet another embodiment of the invention comprising a substrate 64 to which is coupled an input transducer 66 for launching a burst of surface waves on the surface of the substrate 64. Surface wave redirecting means includes a grating 68 of the character of the gratings described above for re directing surface wave burst components derived therefrom across the surface of the substrate 64 to output transducer means 70 along a plurality of paths of different lengths which are respectively associated with different positions along a coordinate axis on the display surface.

The Figure 12 embodiment differs from other embodiments described in that the output transducer means 70 extends in the direction of the coordinate axis 69 and is of such length as to intercept each of the plurality of burst component paths. Circuit means (not shown) may be provided for initiating surface wave bursts on the surface and for detecting touch-induced perturbations of received wave burst components. It will be understood that unlike the other embodiments described, the varying component of the transit time of each of the surface wave burst components will only be half that in the aforedescribed embodiments. In the aforedescribed embodiments the variable part of the transit time of the surface wave burst component had an outgoing component and a returning component, whereas in the Figure 12 embodiment, the surface wave burst component transit time has only an outgoing component. It is, of course, understood that the functions of input and output transducer may be interchanged.

Yet another embodiment of the invention is shown schematically in Figure 13. Whereas in each of the

11

aforedescribed embodiments, the wave redirecting means, or reflective grating, is continuous, producing an analog output signal, in the Figure 13 embodiment the wave redirecting means comprises discrete groups of wave reflective elements, two of which groups are shown at 72 and 74. The groups are spaced in the direction of the coordinate axis such that the paths of the surface wave burst components, shown schematically at 76, 78, are discrete and non-overlapping.

The output of the output transducer (not shown), rather than being an analog signal as shown for example at 48 in Figure 8, will have a pulse characteristic as shown, for example, in Figure 14. In Figure 14 the pulses 80 have a height which defines an envelope corresponding to the wave form 48 in Figure 8. In Figure 14, a pulse 82 of reduced height corresponds in time to the timing of a surface wave burst component which has been perturbed by its passage through a touched region on the surface of the touch panel apparatus.

In the Figure 13 embodiment, circuit means (not shown) includes processing means for processing the pulses and may develop a waveform such as shown in Figure 15 consisting of a series of pulses 84 wherever the pulse height exceeds a predetermined threshold and a pulse void 86 corresponding to the missing pulse 82 (less than the threshold). The circuit means aforedescribed for initiating surface wave bursts on the surface and for detecting touch-induced perturbations of received wave burst components may include means for determining, by, an analysis based on the timing of the detected pulse void associated with a perturbed wave burst component or by counting the pulses preceding the void, which of the plurality of paths was traversed by the touch-perturbed wave burst component and thus the location of the touch along the coordinate axis of the display surface.

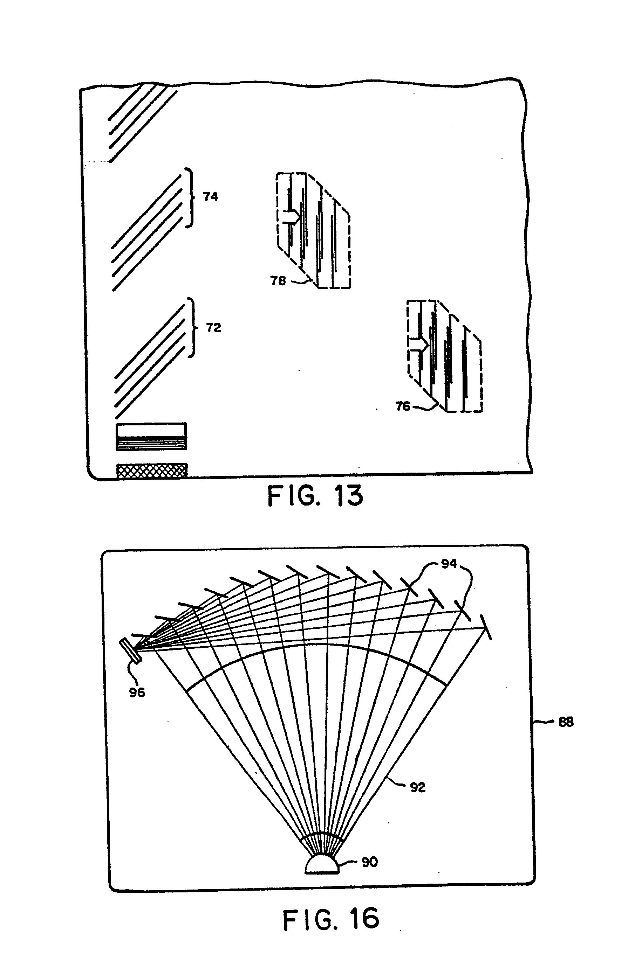

Figure 16 illustrates yet another embodiment of the invention in which the coordinate axis is not linear, but rather is angular. Such a one-coordinate system (angle only) could be used, for example, on the cover of a conventional meter to initiate an action in response to the meter reading. The Figure 16 embodiment, which shows such a system in highly schematic form, comprises a display substrate 88 coupled to which is an input transducer 90 for launching circular surface waves which radiate outwardly across a display sur face having angular coordinate markings 92 from the apparent center point of the angular coordinate system. Surface wave redirecting means in the form of a series of discrete reflectors 94 redirect the wave components derived from the burst to an output transducer 96 along a plurality of paths of different lengths which are respectively associated with different angular positions on the display surface. Circuit means similar to that described above, coupled to the input and output transducer means 90, 96 for initiating surface wave bursts on the surface of the substrate 88 may be provided. As for the above described embodiment, the circuit means includes means for determining by an analysis of the transit time of a detected perturbed wave burst component, which of the plurality of radial paths was traversed by the touch-perturbed wave burst component, and thus the angular location of the touch along the angular axis of the display surface.

The Figure 16 embodiment illustrates that the principles of the invention may be employed in a system in which the redirecting means does not redirect the surface waves across the display surface for detecting a touch, but rather intercepts the surface waves after they have traversed the display (touch) surface. It is, however, understood that the functions of input and output transducers may be interchanged, and if that is done, the redirecting means 94 functions to redirect the surface waves, now generated by transducer 96, onto radial paths across the display surface toward transducer 90. As in each of the above embodiments, an output signal will be developed which reveals a perturbation associated with a touch of the display surface, and the timing of which perturbation signifies, or can be processed to signify, the position of the touch on the panel along the predetermined coordinate axis.

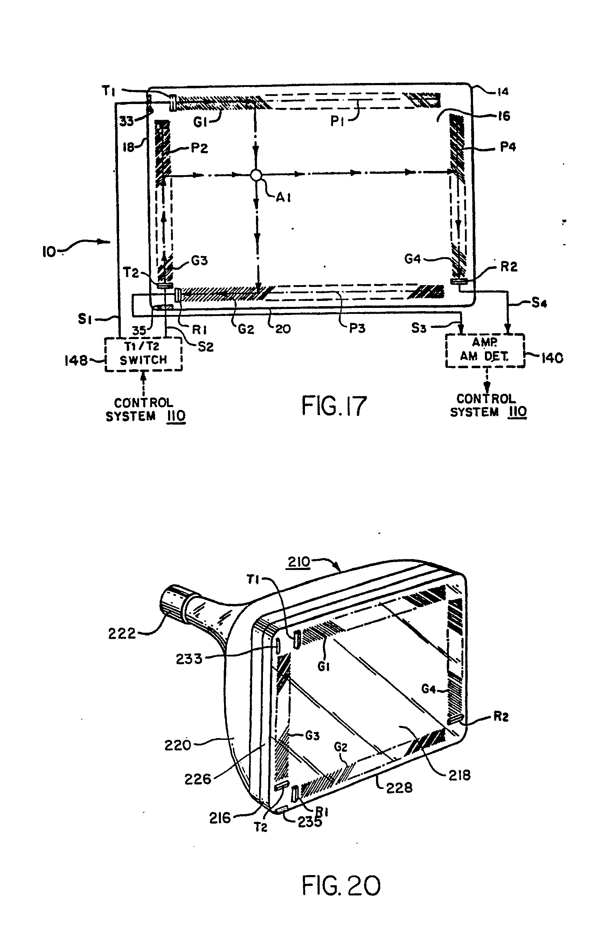

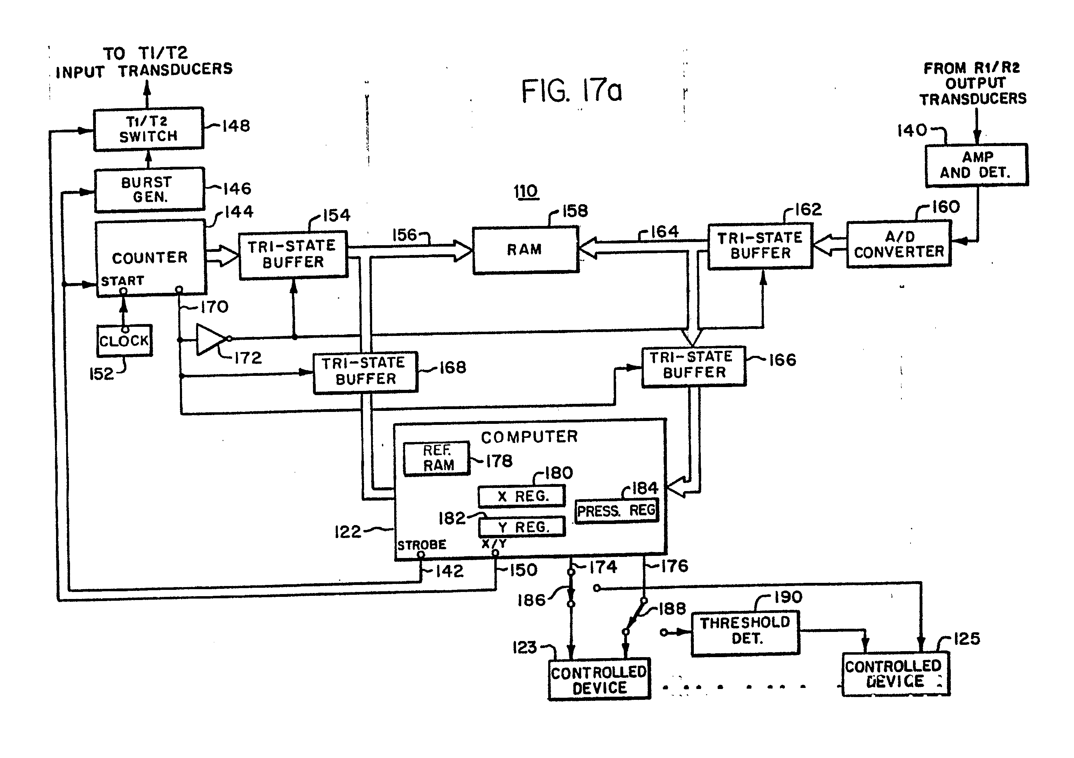

Figure 17 illustrates one way in which the apparatus 10 of Figure 1 can be physically connected to a control system 110 in order to develop control signals indicative of touch position and touch pressure by a user on the substrate surface 16 of apparatus 10 .

To this end, the touch panel control system 110 , which is detailed in Figure 17A and fully described below, includes a computer 122 for rendering associated circuitry operative in a predetermined sequence so that when a touch-induced perturbation of acoustic wave energy is detected, converted to an electrical signal and fed back to the computer, the location of the touch, as well as the touch pressure employed to induce the perturbation, are identifiable by the computer and converted to control signals containing information indicative of touch location and touch pressure. As will be shown, these signals are applied to a controlled device 123, which can be the display device 14 shown in Figure 2.

As shown in Figure 17, the substrate surface 16 of device 14 supports a pair of input, or transmitter transducers T1, T2 and a pair of output, or receiver, transducers R1, R2. In a manner to be described below, in connection with the explanation of system 110 transducers T1, T2 are stimulated by firing signals in a timed sequence so that the location of a subsequent perturbation of a surface wave is identifiable. Input transducers T1, T2, which are more particularly described below, are mounted upon substrate surface 16 adjacent to edges 18 and 20, respectively, see Figure 2. A source T1/T2 switch associated with the ·computer 122, shown in Figure 17A serves to apply input firing signals S1, S2 to respective transducers T1, T2, which transducers, in response thereto, individually launch a burst of acoustic surface waves along first and second paths P1, P2, respectively on substrate surface 16.

Also as shown in Figure 2, first and second output transducers R1, R2, are mounted upon substrate surface 16 adjacent to respective edges 18, 20 that is, the edges close to their associated input transducer T1, T2. As discussed above, transducers R1, R2, upon receipt of the surface waves launched by their associated input transducers that experience as touch-induced perturbation will develop respective output signals S3, S4 which, upon analysis, will exhibit a first characteristic indicative of the position, or location of the touch on the substrate surface and a second characteristic indicative of the touch pressure.

As shown in Fig. 17A the output signals S3, S4 are applied to means including an amplifier and AM detector 140 which is coupled to the outputs of receiving transducers R1, R2 for determining which of paths ph, pv the touch-perturbed wave traversed and thereby establish the location of the touch along two coordinates of substrate 16 in the manner described above generally with regard to Figures 2 thru 4, inclusive.

The manner in which the touch panel control system 110 of Figure 17A serves to generate and apply firing signals to substrate transducers T1 and T2 and, to analyze touch-perturbed surface wave components delivered by receiver transducers R1 and R2, will now be presented.

Figure 17A comprises a block diagram of control system 110 which is connected between the input transducers T1, T2 and the output transducers R1 and R2. As will be explained in further detail hereinafter, control system 110 initiates the generation of properly timed surface acoustic waves across substrate surface 16 of the touch panel and processes the analog output signals S3, S4, produced in response thereto, graphically depicted in Figures 3 and 4, for deriving respective control signals containing information indicative of touch position and touch pressure.

More particularly, the control system 110 comprises the computer 122 having a strobe output terminal 142 connected to the start input of a counter 144 and to the input of a burst generator 146. In response to a strobe signal, which defines the beginning of a memory "write" cycle, burst generator 146 generates a high frequency burst (for example, 16 to 24 cycles at 4 MHz) which is coupled to a T1/T2 (X/Y) switch 148 for application to the T1 and T2 transducers. The state of switch 148 is controlled by a bit developed on an X/Y output 150 of computer 122 such that the burst is alternately coupled to the X and Y transducers (T1/ T2) for producing surface acoustic waves across the touch panel in the X and Y (as they are conventionally designated) directions. The strobe signal also enables counter 144 which begins counting clock pulses generated by a clock 152. The output of counter 144 comprises a sequence of address signals which are coupled by an enabled tri-state buffer 154 to an address bus 156 for application to the address input of a RAM 158. The amplitude modulated signal S3 or S4 developed by either the R1 or R2 output transducers in response to the high frequency burst is coupled by the amplifier and detector 140 to the input of an A/D converter 160. A/D converter 160 converts the analog input signal to a digital format, for example a six bit signal, the digital signal being coupled by a second enabled tri-state buffer 162 to a data bus 164 for application to the data input of RAM 158 as well as to the input of a third tri-state buffer 166 whose output is connected to the data input of computer 122. A fourth and final tri-state buffer 168 is coupled between an address output of computer 122 and address bus 156. During a memory "write" cycle initiated by a strobe pulse on output 142 of computer 122, buffers 166 and 168 are both disabled inhibiting the application of data to computer 122 via buffer 166 and the application of address signals from computer 122 to address bus 156 via buffer 168. Thus, during the memory "write" cycle a plurality of digital samples, e.g., 320, of the X or Y analog output signal are written into RAM 158 in response to the address signals from counter 144.

After counter 144 completes a full counting cycle, (i.e. 320 clock pulses) it is internally held in its final counting state and an output 170 thereof transitions from a logically low to a logically high state. This transition defines the end of a memory "write" cycle and the beginning of a memory "read" cycle. In particular, the logically high level on output 170 enables buffers 166 and 168 and is coupled through an inverter 172 for disabling previously enabled buffers 154 and 162. During the ensuing memory "read" cycle, address signals generated by computer 122 are therefore coupled through enabled buffer 168 to address bus 156 for reading the digital samples stored in RAM 158 onto data bus 164. The stored digital samples read onto data bus 164 are coupled through enabled buffer 166 to computer 122 which, as will be explained in further detail hereinafter, processes the data to develop two control signals on outputs 174 and 176 respectively representing the position and pressure of a touch on the touch panel substrate 16. After all of the samples stored in RAM 158 have been read into and processed by computer 122, another strobe pulse is developed on output 142 initiating a second memory "write" cycle, followed by another memory "read" cycle, and so on. It will be understood that the X/Y bit on output 150 toggles X/Y switch 148 during alternate memory "write" cycles so that surface waves are alternately generated in the X and Y directions.

In a preferred embodiment of the invention, the first two memory "write" cycles following power-up of computer 122 establish reference-profiles of the analog output signal in both the X and Y directions against which subsequent outputs are compared to establish touch position and pressure. These reference profiles are stored in a reference RAM 178 of computer 122 during the memory "read" cycles following the first two memory "write" cycles.

During each subsequent memory "write" cycle, which is preferably accomplished at a relatively high speed (e.g., 4.0 Mega-writes/sec) 320 digital samples representing either the X or Y output signal are written into RAM 158. The samples are subsequently transferred to computer 122 at a much slower rate (e.g., 250 kilo-reads/sec) for processing. Computer 122 is programmed for comparing each sample as it is received from RAM 158 with the corresponding reference sample stored in reference RAM 178. Any positive difference between a reference sample stored in RAM 178 and the value of the corresponding sample being read from RAM 158 exceeding a predetermined noise threshold represents a touch on the substrate surface 16.

The position or location of the touch on the panel 16 is established in relation to the memory locations in RAM 178 at which the differences in the X and Y directions were detected. The pressure of the touch is established in relation to the magnitude of the differences. In particular, it has been found useful to average the differences in the X and Y directions to represent the touch pressure. This average difference may conveniently be derived by dividing the sum of the X and Y differences by a factor of two. The derived touch location or position information is stored in an X-register 180 and a Y-register 182 and developed on output 174 while the derived touch pressure information is stored in a pressure-register 184 and developed on output 176.

For purposes of illustration, the touch position and pressure information provided on outputs 174 and 176 respectively of computer 122 are shown as being coupled through a pair of switches 186 and 188 to two controllable devices 123 and 125. With the switches in the positions shown in Figure 17A, both the position and pressure representative signals are applied to device 123. The signal on output 174 will thus provide touch position information to device 123 while the signal on outputs 176 will provide touch pressure information to device 123. Since the touch pressure information has a high degree of resolution, preferably comprising, for example, a six bit signal, it may be considered to be indicative of plural discrete non-zero levels of touch pressure, or a continuum of levels of touch pressure and thus effectively represent a continuously variable signal of the type useful for representing analog functions such as volume control and the like.

When switches 186 and 188 are switched to their other positions, touch position information is directly provided to device 125 while touch pressure information is coupled to the device through a threshold detector 190. Threshold detector 190 may, for example, be designed to provide an output to device 125 only when the pressure information on output 176 exceeds a selected threshold value. In this manner, an on/off type function of device 125 can be conveniently controlled in response to touch pressure. By way of example, in an application or embodiment wherein the system is configured as it appears when switches 186 and 188 couple the outputs on 174 and 176 to device 125, the system could be designed such that touch pressure above a predetermined noise threshold activates a display or indicator signalling the user that a certain function has been selected. Pressing the panel harder causes a second threshold to be exceeded and the command to be "entered". As a second example, with the switches 186, 188 in the other position, an operative touch (above the noise threshold) might activate a display (a car radio, e.g., )-- pressing harder might then control the volume of the output from the radio.

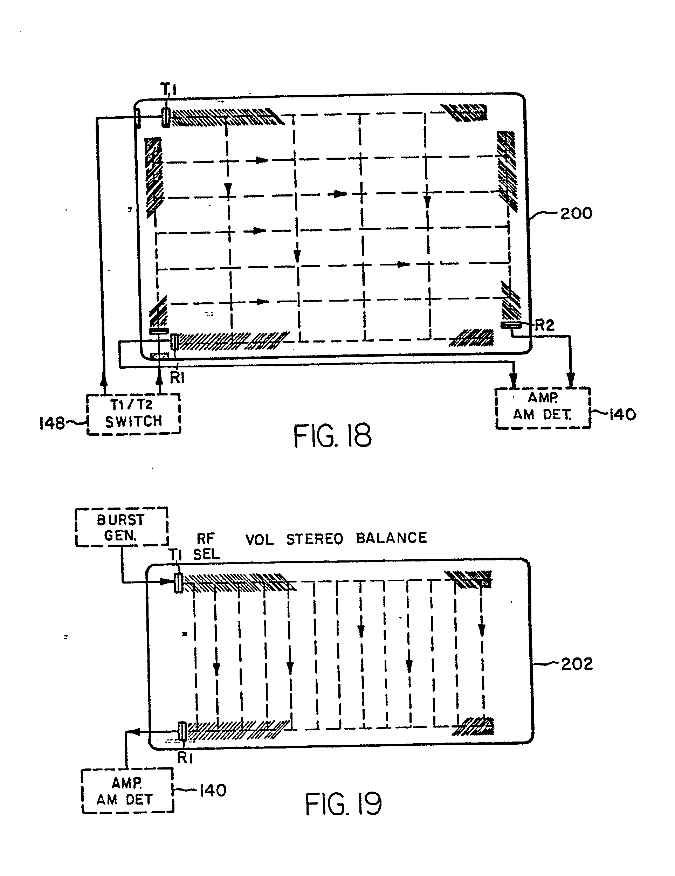

Figure 18 depicts an embodiment wherein the touch panel can comprise a form of a key pad substrate 200, that is, a control as the generation and distribution of acoustic surface waves across substrate 200 is concerned, such generation and detection of touch-perturbated surface waves is achieved in the same manner as that for the principal embodiment. As shown, by the phantom blocks associated with the transducers, the input and output signals are processed by the touch panel control system 110 already described. It is contemplated that such a key pad would be particularly attractive as a remote controller. Specifically the key pad could be hand held and actuated to trace a pattern or to locate a cursor upon a remote display panel. When a desired cursor location is reached, pressure is then applied to the key pad to produce a control effect. If the display panel is associated with a CRT, the control effect can be employed to change a menu, delete a word or block at the selected cursor location, or move a word or block, etc.

Another area of application for such a key-pad is in the field of video games. The traced path of the finger could develop a first signal to effect tracking (location) of a target on a display device then the application of pressure could develop a second signal that effectively fires a missile at the target. In accordance with the invention, in each key-pad example discussed above, resort to the above-described touch panel control system serves to produce two control signals, one related to touch location and the second related to touch pressure.

Figure 19 illustrates the application of the inventive touch control system to an embodiment characterized by a single coordinate touch panel 202. Again, surface wave generation and detection of touch-perturbated surface waves is accomplished in the manner above described. Specifically the control panel shown therein can comprise a console controller for a radio or a television receiver, a stereo player, etc. In a receiver application, the application of a touch near the left side of the panel could serve to develop a first control signal to activate an RF signal selector, then, applying pressure at that location will develop a second control signal that initiates a scanning across the RF spectrum with the magnitude of pressure being determinative of scanning speed.

In like fashion, moving the finger to the right will develop a control signal that gives the operator control of audio volume. Then, of course, the application of pressure provides the second control signal to adjust volume level. Control of other functions would entail developing, at other locations, the two control signals to (1) select a function and (2) exert a control effect thereto.

Beyond the field of consumer electronics, including, of course, word processors and other devices utilizing a display device, it is contemplated that the invention would be particularly attractive in commercial installations, e.g., a bank cash station where a rugged substrate surface, in conjunction with the inventive touch control system, could be employed to input control signals to the station to withdraw cash, interrogate an account, etc. In fact, the invention finds application in any field where a pair of control signals reflecting a touch location and accompanying touch pressure are utilizable to perform two related or even unrelated functions.

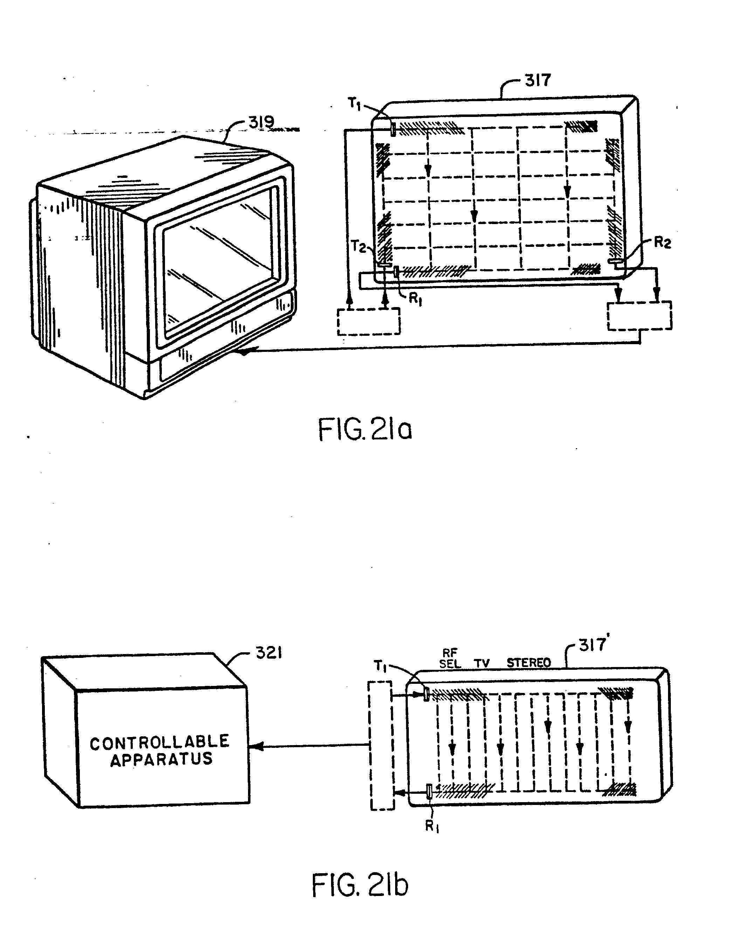

As noted above, the display device 14 may comprise a CRT and Figure 20 illustrates a preferred form of CRT usable with the apparatus 10 of the invention. As shown in Figure 20, a CRT 210 comprises a transparent flat glass faceplate 216 having a touch display surface 218 that constitutes a substrate similar to the substrate 16 described above and capable of propagating surface acoustic waves and is so characterized that a touch on that surface causes a perturbation of a surface wave propagating through the region of the touch. CRT 210 further comprises a funnel 220 the forward end of which is frit sealed to faceplate 216. The distal end of the funnel terminates in a neck section 222 which encloses an electron gun structure.

The surface 218 of faceplate 216 is similar to the aforesaid substrate surface 16 in that it also supports a first pair of input and output surface wave transducer means T1, R1, respectively, and a second pair of input and output transducer means T2, R2, respectively. Further, the input transducers (transmitters) T1, T2 are mechanically and acoustically coupled to faceplate surface 218 to the end that, when excited, they individually launch respective bursts of surface waves upon surface 218. Output transducers (receivers) R1, R2 are similarly coupled to surface 218 so that, upon receipt of surface wave energy, they issue individual electrical output signals. The input transducers T1, T2 are mounted upon faceplate surface 218 adjacent to edges 226 and 228, respectively- see Figure 20.

Reflective gratings like the gratings G1, G2, G3 and G4 of Figure 2 are disposed on the substrate surface 218 as shown in Figure 20. Thus, the first reflective grating G1 is preferably disposed parallel to the upper edge of substrate surface 218.

The second reflective grating G2 is disposed parallel to the lower edge 228 of substrate surface 218.

Similarly, the third reflective grating G3 is disposed parallel to the side edge 226 of substrate surface 218 while the fourth reflective grating G4 is disposed parallel to the opposed side edge of the substrate surface 218.

Thus, display surface 218 is now effectively provided with an overlying grid comprising a multiplicity of intersecting paths of acoustic surface wave bursts which surface waves are confined to predetermined paths, one series $P_h$ being disposed parallel to what may be termed the horizontal or major axis of display surface 218 while a second, intersecting series of paths $P_v$ are disposed parallel to the vertical or minor axis of the display surface. In this fashion intersecting wave energy paths traverse the surface of the display device, forming an invisible grid that overlies display surface 218.

In the illustrated application, the faceplate, or panel, is commonly designated a "touch control panel" since graphics, or other information may be ordered up for display, for example, from controller 12 of Figure 1 in response to an operator's command which can take the form of a touching of a particular area of a menu associated with the touch control panel. The display surface 16, whether it be a CRT faceplate or a separate panel, constitutes a substrate the surface of which is capable of propagating surface acoustic waves.

In this regard, it is to be appreciated that the touch panel can adopt the format of a tablet, e.g., a sheet of glass or other substrate capable of propagating surface acoustic waves which, in the interests of convenience, or to import flexibility to the system, can be positioned at a location remote from the apparatus to be controlled. More particularly, Figure 21A depicts a touch control tablet 317 which is positioned at a location remote from a controlled image display device 319 which can be a video monitor. As shown, a touch control panel, or tablet 317, is coupled to the monitor by a cable; however, it is recognized that the control effects instituted by the tablet could readily be applied to the monitor by an infrared (IR) coupling so as to dispense with cabling.

Moreover, as noted, the apparatus controlled by the touch control tablet need not be an image display device. Figure 21B exemplifies an embodiment wherein a controllable apparatus 321, which can be a home entertainment center (radio, stereo, TV, etc.), is actuated by a remotely located touch control tablet 317'. As in the Figure 21A embodiment the touch control tablet 317' is shown as coupled via a cable to apparatus 321 to enable one to select a particular function of the entertainment center. Again, an IR or other coupling can be substituted for cabling.

## Claims

1. An acoustic wave touch panel system (10) for recognizing and responding to touch along a predetermined coordinate axis on the touch surface (16), said system (10) including surface wave transducer means comprising input and output transducer means ($T_1$, $T_2$; $R_1$, $R_2$), respectively, coupled to the substrate surface (16) and input circuit means (25) associated with said input transducer means ($T_1$, $T_2$) for generating surface waves on said substrate surface (16) in a plurality of paths (Pv, ph) between the input and output transducers, ($T_1$, $T_2$; $R_1$, $R_2$) and output circuit means (23) coupled to said output transducer means ($R_1$, $R_2$) for detecting the position of a touch on said substrate (16), characterized in that said system including surface wave redirecting means ($G_1$, $G_2$, $G_3$, $G_4$) coupled to said substrate surface (16) for redirecting surface wave burst components derived from a burst of surface waves produced by said input transducer means ($T_1$, $T_2$) across said surface (16) to said output transducer means ($R_1$, $R_2$) along a plurality of paths (Pv, Ph) of different lengths which are respectively associated with different positions along said coordinate axis on said touch surface (16), and said output circuit means (23) being capable of detecting touch-induced amplitude damping of received wave burst components by the fact that a touch on said substrate surface (16) damps, in the form of at least a partial absorption of energy, the amplitude of a surface wave propagating through the region of the touch, to develop an output signal having a wave-timing-related characteristic indicative of which of said plurality of paths (Pv, Ph) was traversed by the touch-damped wave burst component and thus the location of the touch along said coordinate axis of said surface (16).

2. The touch panel system of claim 1, characterized in that the surface wave burst initiated by said input transducer means ($T_1$, $T_2$) has a duration T in the range of 1.0 w/c to 2.0 w/c, where "w" is the width of said input transducer means ($T_1$, $T_2$) and "c" is the velocity of propagation of surface wave on said surface substrate (16).

3. The touch panel system of claim 1 or 2, characterized in that said output transducer means ($R_1$, $R_2$) extends along said substrate surface (16) in the direction of said axis a distance such as to intercept a plurality of said paths (Pv, Ph) of said wave burst components.

4. The touch panel system of claim 1, 2 or 3, characterized in that the input transducer means ($T_1$) launches said surface waves along a first path ($P_1$) on said surface (16) and said output transducer means ($R_2$) is disposed at the terminus of a second path ($P_3$) on said surface (16), said surface wave redirecting means includes a first reflective grating ($G_1$) comprising an array of reflective elements (el-en) disposed along said first path ($P_1$), with said elements (el-en) effectively arranged at like angles of incidence to the longitudinal axis of said first path ($P_1$), said grating ($G_1$) being capable of extracting from said surface wave a multiplicity of wave components and for directing said wave components across said substrate surface (16) along a like multiplicity of paths (Pv) each disposed at an angle to said axis of said first path ($P_1$), and a second reflective grating ($G_2$) comprising an array of reflective elements (e'l-e'n) disposed along said second path ($P_3$) and effectively arranged at like angles of incidence to the longitudinal axis of said second path ($P_3$) for intercepting said wave components and capable of redirecting said intercepted wave components along said second path toward said output

transducer means ($R_1$).

5. The touch panel system of claim 4, characterized in that that said surface wave redirecting means ($G_1$-$G_4$) includes an array of half-wave spaced grooves or deposits of wave-reflective material.

6. The touch panel system of claim 4 or 5, characterized in that said surface wave redirecting means ($G_1$, $G_2$) includes a reflective array having an increasing reflectivity in a direction away from said input transducer means ($T_1$, $T_2$), to at least partially compensate for the fall-off in wave amplitude with increasing wave path length.

7. The touch panel system of claim 4, 5 or 6, characterized in that said reflective array ($G_1$-Fig. 9) has, in said direction away from said input transducer means ($T_1$), selected array elements eliminated in progressively decreasing proportion to effect said increasing reflectivity.

8. The touch panel system of claim 4, 5 or 6, characterized in that said reflective array ($G''_1$-Fig. 10a) has array elements whose individual length increases in said direction away from said input transducer means ($T_1$), and whose individual position in a direction along the length of the element is varied within the side boundaries of the array ($G''_1$).

9. The touch panel system of claims 1, 2 or 3, characterized in that the system includes reflective means (60) capable of reflecting surface wave burst components derived from said surface wave burst across said substrate surface (16) back to said input transducer means (61) along said plurality of paths (Ph) respectively associated with different positions along said axis on said substrate surface (16).

10. The touch panel system of claim 9, characterized in that the input and output surface wave transducer means ($T_1$, $T_2$; $R_1$, $R_2$) are part of a common input/output transducer means (61).

11. The touch panel system of claim 1 or 2 for use with a touch panel angular coordinate display apparatus characterized in that the system (10) is adapted to recognize touch positions at different angles on a display surface (88, Fig. 16) of said apparatus, and wherein the input surface wave transducer means (90) is capable of launching a burst of circular surface waves which radiate outwardly across the display surface (88) from the apparent center point of the co-ordinate system, the surface wave redirecting means (94) redirecting surface wave burst components derived from said surface wave burst to said output transducer means (96) along a plurality of paths of different lengths which are respectively associated with different angular positions on said display surface (88), and said output circuit means (23) including means capable of determining, by an analysis based on the transit time of the detected perturbed wave burst component, which of said plurality of paths was traversed by the touch-perturbed wave burst component and thus the angular location of the touch on said display surface (88).

12. The touch panel system of any of the preceding claims, characterized in that said output circuit means comprises a control system (110-Fig. 17a) receiving an output signal ($S_3$, $S_4$) having a first wave-timing-related characteristic indicative of which of said plurality of paths (Ph, Pv) was traversed by the touch-damped wave burst component and thus the location of the touch along said coordinate axis of said surface (16), said output signal ($S_3$, $S_4$) having a second characteristic indicative of the touch-pressure-induced damping of said wave burst component propagating on said surface (16) through the region of the touch, and said system (110) including recognition circuit means (122) receiving said output signal ($S_3$, $S_4$) and responsive to said first characteristic for developing a first signal (174) containing information indicative of the position of the touch, and responsive to said second characteristic for developing a second signal (176) containing information indicative of plural discrete non-zero levels of touch pressure or a continuum of levels of touch pressure.

13. The touch panel system of claim 12, characterized in that the output signal ($S_3$, $S_4$) has a signal-level-versus-time characteristic with a dip whose location on the time axis is indicative of the transit time of the detected damped wave burst component, and whose depth is indicative of the degree of damping of the detected damped wave burst component, and said recognition circuit means (122) is responsive to the timing of said dip in the signal-level-versus-time characteristic of said output signal ($S_3$, $S_4$) for developing the first signal (174) indicative of the location of the touch along said coordinate axis of said surface (16), said recognition circuit means (122) also being responsive to the depth of said dip for developing the second signal (176) indicative of the level of damping of said surface acoustic waves propagating on said surface (16) through said region of the touch.

14. The touch panel system of claim 12 or 13, characterized in that said control system (110) includes means (160) coupled to said control system (110) for developing an electrical amplitude characterization of said touch-pressure-induced perturbation, means (158) capable of sampling the amplitude of the rectified output from said output transducer means $R_1$, $R_2$) at a plurality of time spaced points, storing the amplitude samples for future reference, during a touch of the apparatus (10), again sampling the amplitude of the said output transducer output ($R_1$, $R_2$) and comparing the developed touch-related amplitude samples with the stored reference samples, and developing said first control signal (174) representing the timing-related point of greatest difference between the amplitudes of said reference samples and said touch-related samples and thus the timing of said touch-perturbed wave burst, and developing said second control signal (176) representing the magnitude of the said greatest difference.

15. The touch panel system of claim 14, characterized in that said control system (110) includes differentiating means capable of differentiating the output from said output transducer means $R_1$, $R_2$), the zero crossing of resulting signal representing the timing of said touch-perturbed wave burst.

16. The touch panel system of any of the preceding claims, characterized in that the substrate (218, Fig. 20) is formed or applied to a transparent flat faceplate (216) of a cathode ray tube (210), the input and output surface wave transducer means ($T_1$, $T_2$; $R_1$, $R_2$) being mechanically and acoustically coupled to said faceplate surface (216) and said reflective array ($G_1$-$G_4$) being formed or applied to said faceplate surface (216) for cooperation with said input transducer means ($T_1$, $T_2$).

17. The touch panel system of any of claims 1 to 15 for use in actuating a remotely located controllable apparatus, characterized in that the substrate comprises a tablet (200, 317, 317') positioned remote from said apparatus (319, 321) but operatively connected thereto by a suitable coupling.

18. The touch panel system of claim 17, characterized in that the controllable apparatus comprises a graphics display apparatus (319).

19. The touch panel system of claim 17 or 18, characterized in that said tablet (200, 317, 317') is formed of a sheet of glass.

## Revendications

1. Un système (10) de panneau de commande à touches réagissant à des ondes acoustiques pour reconnaître le contact sur les touches le long d'un axe de coordonnées prédéterminé de la surface des touches (16) et y réagir, ledit système (10) comprenant des moyens transducteurs d'ondes de surface comprenant des moyens transducteurs d'entrée et de sortie ($T_1$, $T_2$; $R_1$, $R_2$). respectivement, couplés à la surface de substrat (16) et des moyens de circuit d'entrée (25) associés auxdits moyens transducteurs d'entrée ($T_1$, $T_2$) pour engendrer des ondes de surface sur ladite surface de substrat (16) dans plusieurs trajets (Pv, Ph) entre les transducteurs d'entrée et de sortie ($T_1$, $T_2$, $R_1$, $R_2$) et des moyens de circuit de sortie (23) couplés auxdits moyens transducteurs de sortie ($R_1$, $R_2$) pour détecter la position d'une touche sur ledit substrat (16), caractérisé en ce que ledit système comprend des moyens pour rediriger l'onde de surface ($G_1$, $G_2$, $G_3$, $G_4$) couplés à ladite surface de substrat (16) pour rediriger des composantes de paquets d'ondes de surface dérivées d'un paquet d'ondes de surface produit par lesdits moyens transducteurs d'entrée ($T_1$, $T_2$) sur ladite surface (16) vers lesdits moyens transducteurs de sortie ($R_1$, $R_2$) le long d'une multiplicité de trajets (Pv, Ph) de longueurs différentes qui sont respectivement associés à des positions différentes le long dudit axe de coordonnées de ladite surface de touche (16), et lesdits moyens (23) de circuit de sortie étant susceptibles de détecter un amortissement d'amplitude, induit par les touches, des composantes du paquet d'ondes reçu par le fait qu'une touche située sur ladite surface de substrat (16) amortit, sous la forme d'au moins une absorption partielle d'énergie, l'amplitude d'une onde de surface qui se propage à travers la zone de la touche pour développer un signal de sortie présentant une caractéristique, reliée à une synchronisation d'onde, indiquant lequel des multiples trajets (Pv, Ph) a été traversé par la composante, amortie par la touche, du paquet d'ondes et de cette manière l'emplacement de la touche le long dudit axe de

EP 0 190 734 B1

coordonnées de ladite surface (16).

2. Le système de panneau de commande à touches selon la revendication 1, caractérisé en ce que le paquet d'ondes de surface initié par lesdits moyens transducteurs d'entrée ($T_1$, $T_2$) est d'une durée T dans la plage de 1,0 w/c à 2,0 w/c, où "w" est la largeur desdits moyens transducteurs d'entrée ($T_1$, $T_2$) et "c" est la vitesse de propagation de l'onde de surface sur ladite surface de substrat (16).

3. Le système de panneau de commande à touches selon la revendication 1 ou 2, caractérisé en ce que ledit moyen transducteur de sortie ($R_1$, $R_2$) s'étend le long de ladite surface de substrat (16) dans la direction dudit axe à une distance appropriée pour intercepter plusieurs trajets (Pv, Ph) desdites composantes de paquet d'ondes.

4. Le système de panneau de commande à touches selon la revendication 1, 2 ou 3, caractérisé en ce que le moyen transducteur d'entrée ($T_1$) envoie lesdites ondes de surface le long d'un premier trajet ($P_1$) de ladite surface (16) et ledit moyen transducteur de sortie ($R_2$) est disposé à la fin d'un deuxième trajet ($P_3$) de ladite surface (16), ledit moyen destiné à rediriger l'onde de surface comprend un premier réseau réfléchissant ($G_1$) comprenant un ensemble d'éléments réfléchissants (e1-en) disposé le long dudit premier trajet ($P_1$), lesdits éléments (e1-en) étant effectivement agencés selon des angles d'incidence semblables par rapport à l'axe longitudinal dudit premier trajet ($P_1$), ledit réseau ($G_1$) étant susceptible d'extraire de ladite onde de surface une multiplicité de composantes d'onde et pour diriger lesdites composantes d'onde sur ladite surface de substrat (16), l'onde d'une multiplicité semblable de trajets (Pv) disposés chacun selon un angle par rapport audit axe dudit premier trajet ($P_1$) et un deuxième réseau réfléchissant ($G_2$) comprenant un ensemble d'éléments réfléchissants (e'1-e'n) disposé le long dudit deuxième trajet ($P_3$) et agencé effectivement à des angles semblables d'incidence par rapport à l'axe longitudinal dudit deuxième trajet ($P_3$) pour intercepter lesdites composantes d'onde et susceptible de rediriger lesdites composantes d'ondes interceptées le long dudit deuxième trajet vers ledit moyen transducteur de sortie ($R_1$).

5. Le système de panneau de commande à touches de la revendication 4, caractérisé en ce que ledit moyen d'onde de surface ($G_1$-$G_4$) comprend un groupe de rainures, ou de dépôts d'une matière réfléchissant les ondes, espacés d'une demi-onde.

6. Le système de panneau de commande à touches selon la revendication 4 ou 5, caractérisé en ce que ledit moyen ($G_1$, $G_2$) pour rediriger les ondes de surface comprend un groupe réfléchissant possédant une réflectivité croissante dans une direction qui s'écarte dudit moyen transducteur d'entrée ($T_1$, $T_2$) pour compenser au moins partiellement la diminution de l'amplitude d'onde lorsque la longueur de trajet d'onde augmente.

7. Le système de panneau de commande à touches selon la revendication 4, 5 ou 6, caractérisé en ce que ledit groupe réfléchissant ($G_1$-Fig. 9) comporte, dans ladite direction s'écartant desdits moyens transducteurs d'entrée ($T_1$), des éléments d'ensemble choisis éliminés dans une proportion progressivement décroissante pour réaliser ladite réflectivité croissante.

8. Le système de tableau de commande à touches selon la revendication 4, 5 ou 6, caractérisé en ce que ledit groupe de réflexion (G"$_1$-Fig. 10a) possède des éléments d'ensemble dont la longueur individuelle augmente dans ladite direction s'écartant desdits moyens de transducteur d'entrée ($T_1$), et dont la position individuelle dans une direction le long de la longueur de l'élément varie à l'intérieur des limites latérales de l'ensemble (G"$_1$).

9. Le système de panneau de commande à touches selon les revendications 1, 2 ou 3, caractérisé en ce que le système comprend des moyens réfléchissants (60) susceptibles de réfléchir les composantes de paquet d'ondes de surface dérivées dudit paquet d'ondes de surface à travers ladite surface de substrat (16), en retour vers lesdits moyens transducteurs d'entrée (61) le long desdits multiples trajets (Ph) respectivement associés aux différentes positions le long dudit axe de ladite surface de substrat (16).

10. Le système de tableau de commande à touches selon la revendication 9, caractérisé en ce que les moyens transducteurs d'onde de surface d'entrée et de sortie ($T_1$, $T_2$; $R_1$, $R_2$) font partie d'un moyen

19

transducteur d'entrée/sortie commun (61).

11. Le système de tableau de commande à touches selon la revendication 1 ou 2 à utiliser avec un appareil d'affichage de coordonnées angulaires à tableau de commande à touches caractérisé en ce que le système (10) est apte à reconnaître des positions de touches à des angles différents sur une surface d'affichage (88, Fig. 16) dudit appareil, et dans lequel le moyen transducteur (16) d'onde de surface d'entrée est susceptible de lancer un paquet d'ondes de surface circulaires qui rayonne vers l'extérieur sur la surface d'affichage (88) à partir du point central apparent du système de coordonnées, les moyens (94) pour rediriger l'onde de surface redirigeant les composantes du paquet d'ondes de surface dérivées dudit paquet d'ondes de surface à partir desdits moyens de transducteur de sortie (96) le long d'une multiplicité de trajets de longueurs différentes qui sont respectivement associés à des positions angulaires différentes sur ladite surface d'affichage (88), et lesdits moyens de circuit de sortie (23) comprenant des moyens susceptibles de déterminer, par une analyse basée sur le temps de transit de la composante détectée perturbée de paquet d'ondes, lequel desdits multiples trajets a été traversé par ladite composante perturbée par touches du paquet d'ondes et de cette manière l'emplacement angulaire de la touche sur ladite surface d'affichage (88).

12. Le système de tableau de commande à touches selon l'une quelconque des revendications précédentes, caractérisé en ce que ledit moyen de circuit de sortie comprend un système de commande (110-Fig. 17a) recevant un signal de sortie ($S_3$, $S_4$) possédant une première caractéristique, reliée par une synchronisation d'onde, indiquant lequel desdits multiples trajets (Ph, Pv) a été traversé par la composante amortie par touches du paquet d'ondes et de cette manière l'emplacement de la touche le long dudit axe de coordonnées de ladite surface (16), ledit signal de sortie ($S_3$, $S_4$) possédant une deuxième caractéristique indiquant l'amortissement induit par la pression de touches de ladite composante du paquet d'ondes se propageant sur ladite surface (16) dans ladite zone de la touche et ledit système (110) comprenant des moyens (122) de circuit de reconnaissance recevant ledit signal de sortie ($S_3$, $S_4$) et sensibles à ladite première caractéristique pour développer un premier signal indicatif de l'emplacement de la touche et sensibles à ladite deuxième caractéristique pour développer un deuxième signal (176) contenant une information indiquant plusieurs niveaux discrets non nuls de pression de touche ou un ensemble continu de niveaux de pression de touche.

13. Le système de tableau de commande à touches de la revendication 12, caractérisé en ce que le signal de sortie ($S_3$, $S_4$) possède une caractéristique de niveau de signal en fonction du temps présentant un point bas dont l'emplacement sur l'axe des temps est indicatif du temps de transit de la composante amortie détectée du paquet d'ondes, et dont la profondeur est indicative du degré d'amortissement de la composante amortie détectée du paquet d'ondes, et ledit moyen (122) de circuit de reconnaissance est sensible à la synchronisation dudit point bas dans la caractéristique de niveau de signal en fonction du temps dudit signal de sortie ($S_3$, $S_4$) pour développer le premier signal (174) indicatif de l'emplacement de la touche le long dudit axe de coordonnées de ladite surface (16), ledit moyen de circuit de reconnaissance (122) étant aussi sensible à la profondeur dudit point bas pour développer le deuxième signal (176) indicatif du niveau d'amortissement desdites ondes acoustiques de surface se propageant sur ladite surface (16) dans ladite zone de la touche.

14. Le système de tableau de commande à touches selon la revendication 2 ou 3, caractérisé en ce que ledit système de commande (110) comprend des moyens (160) couplés audit système de commande (110) pour développer une caractérisation d'amplitude électrique de ladite perturbation induite par la pression de touche, des moyens (158) susceptibles d'échantillonner l'amplitude de la sortie rectifiée provenant dudit moyen transducteur de sortie ($R_1$, $R_2$) à plusieurs instants espacés dans le temps, mémoriser l'échantillon d'amplitude au vue d'une référence ultérieure, pendant un contact sur la touche de l'appareil (10), échantillonner à nouveau l'amplitude de ladite sortie du transducteur de sortie (R , R ) et comparer les échantillons d'amplitude développés en relation avec les touches avec les échantillons de référence mémorisés et développer ledit premier signal de commande (74) représentant le point de plus grande différence, en relation de synchronisation, entre les amplitudes desdits échantillons de référence et lesdits échantillons reliés à des touches et de cette manière la synchronisation dudit paquet d'ondes perturbé par touche et développer ledit deuxième signal de commande (176) représentant l'amplitude de ladite différence la plus grande.

15. Le système de tableau de commande à touches selon la revendication 14, caractérisé en ce que ledit système de commande (110) comprend des moyens de différentiation susceptibles de différencier la sortie provenant desdits moyens transducteurs de sortie ($R_1$, $R_2$), le passage par zéro du signal résultant représentant la synchronisation dudit paquet d'ondes perturbé par la touche.

16. Le système de tableau de commande à touches selon l'une quelconque des revendications précédentes, caractérisé en ce que le substrat (218, Fig.20) est formé ou appliqué à une plaque de fond (216) transparente d'un tube à rayons cathodiques (210), les moyens de transducteur d'ondes de surface d'entrée et de sortie ($T_1$, $T_2$; $R_1$, $R_2$) étant couplés de façon mécanique ou acoustique à ladite surface de plaque de fond (216) et ledit ensemble réfléchissant ($G_1$, $G_4$) étant formé ou appliqué sur ladite surface de fond (216) pour coopérer avec ledit moyen transducteur d'entrée ($T_1$, $T_2$).

17. Le système de tableau de commande à touches selon l'une quelconque des revendications 1 à 15 à utiliser pour actionner un appareil à commande situé à distance, caractérisé en ce que le substrat comprend une tablette (200, 310 à 317') positionné à distance dudit appareil (319, 321) et relié à celui-ci pour sa mise en oeuvre par un accouplement approprié.

18. Le système de tableau de commande à touches de la revendication 17, caractérisé en ce que l'appareil commandé comprend un appareil d'affichage de graphiques (319).

19. Le système de tableau de commande à touches selon la revendication 17 ou 18 caractérisé en ce que ladite tablette (200, 317, 317') est formée d'une feuille de verre.


## Ansprüche

1. Akustikwellen-Berührungsplattensystem (10) zum Erkennen einer Berührung der Berührungsfläche (16) längs einer vorherbestimmten Koordinatenachse und zum Ansprechen auf eine solche Berührung, wobei das System (10) eine Oberflächenwellenwandlereinrichtung besitzt, die Eingangs- und Ausgangs-wandlermittel ($T_1$, $T_2$; $R_1$, $R_2$) besitzt, die mit der Substratoberfläche (16) gekoppelt sind, sowie den Eingangswandlermitteln ($T_1$, $T_2$) zugeordnete Eingangsschaltungsmittel (25) zum Erzeugen von Oberflächenwellen auf der Substratoberfläche (16) auf einer Mehrzahl von Rahnen (Pv, Ph) zwischen den Eingangs- und Ausgangswandlern ($T_1$, $T_2$; $R_1$, $R_2$) und mit den Ausgangswandlermitteln ($R_1$, $R_2$)-gekoppelte Ausgangswandlermittel (23) zum Erfassen des Ortes einer Berührung der Oberfläche (16), dadurch gekennzeichnet, daß das System mit der Substratoberfläche (16) gekoppelte Oberflächenwel-lenumlenkmittel ($G_1$, $G_2$; $G_3$, $G_4$) aufweist, die dazu dienen, Oberflächenwellenburstkomponenten, von einem Burst von Oberflächenwellen abgeleitet sind, die von den Eingangswandlermitteln ($T_1$, $T_2$) erzeugt werden, auf der genannten Oberfläche (16) zu den Ausgangswandlermitteln ($R_1$, $R_2$) auf einer Mehrzahl von verschieden langen Bahnen (Pv, Ph) umzulenken, die auf der Berührungsfläche (16) verschiedenen Orten längs der genannten Koordinatenachse zugeordnet sind, und daß die Ausgangsschaltungsmittel (23) geeignet sind, eine durch eine Berührung bewirkte Dämpfung der Amplitude von empfangenen Wellenburstkomponenten zu erfassen, weil eine Berührung der Substratoberfläche (16) durch eine mindestens Teilabsorption von Energie die Amplitude einer sich durch den Bereich der Berührung hindurch fortpflanzenden Oberflächenwelle dämpft, und daher sie ein Ausgangssignal erzeugen, das eine mit dem zeitlichen Verlauf der Welle in Beziehung stehende Kennlinie hat, die anzeigt, auf welcher Bahn der Mehrzahl von Bahnen (Pv, Ph) die durch die Berührung gedämpfte Wellenburstkomponente gewandert ist, und die dadurch den Ort der Berührung der genannten Oberfläche (16) längs der Koordinatenachse anzeigt.

2. Berührungsplattensystem nach Anspruch 1, dadurch gekennzeichnet, daß der von den Eingangswand-lermitteln ($T_1$, $T_2$) eingeleitete Oberflächenwellenburst eine Dauer T im Bereich von 1,0 w/c bis 2,0 w/c hat, wobei "w" die Breite der Eingangswandlermittel ($T_1$, $T_2$) und "c" die Fortpflanzungsgeschwindig-keit von Oberflächenwellen auf der Substratoberfläche (16) ist.

3. Berührungsplattensystem nach Anspruch 1 oder 2, dadurch gekennzeichnet, daß sich die Ausgangs-wandlermittel ($R_1$, $R_2$) auf der Substratoberfläche (16) in der Richtung der genannten Achse über eine solche Strecke erstrecken, daß sie die Wellenburstkomponenten auf einer Mehrzahl der genannten Bahnen (Pv, Ph) abfangen.

4. Berührungsplattensystem nach Anspruch 1, 2 oder 3, dadurch gekennzeichnet, daß die Eingangswandlermittel ($T_1$) die Oberflächenwellen auf der genannten Oberfläche auf einer ersten Bahn ($P_1$) aussenden, daß die Ausgangswandlermittel ($R_2$) am Endpunkt einer zweiten Bahn ($P_3$) auf der genannten Oberfläche (16) angeordnet sind, daß die Oberflächenwellenumlenkmittel ein erstes reflektierendes Gitter ($G_1$) besitzen, das eine Anordnung von längs der ersten Bahn ($P_1$) angeordneten, reflektierenden Elementen (el bis en) aufweist, die effektiv unter gleichen Einfallswinkeln zu der Längsachse der ersten Bahn ($P_1$) angeordnet sind, daß das Gitter ($G_1$) befähigt ist, der Oberflächenwelle eine Vielzahl von Wellenkomponenten zu entnehmen und diese Wellenkomponenten auf der Substratoberfläche (16) auf eine gleiche Vielzahl von Bahnen (Pv) zu lenken, die jeweils unter einem Winkel zu der Achse der ersten Bahn ($P_1$) angeordnet sind, und ein zweites reflektierendes Gitter ($G_2$), das eine Anordnung von reflektierenden Elementen (e'1 bis e'n) aufweist, die längs der zweiten Bahn ($P_3$) effektiv unter gleichen Einfallswinkeln zu der Längsachse der zweiten Bahn ($P_3$) so angeordnet sind, daß sie die genannten Wellenkomponenten abfangen, und die befähigt sind, die abgefangenen Wellenkomponenten längs der zweiten Bahn zu den Ausgangswandlermitteln ($R_1$) hin umzulenken.

5. Berührungsplattensystem nach Anspruch 4, dadurch gekennzeichnet, daß die Oberflächenwellenumlenkmittel ($G_1$ bis $G_4$) eine Anordnung von Nuten oder Ablagerungen aus wellenreflektierendem Material in Halbwellenabständen aufweisen.

6. Berührungsplattensystem nach Anspruch 4 oder 5, dadurch gekennzeichnet, daß die Oberflächenwellenumlenkmittel ($G_1$, $G_2$) eine reflektierende Anordnung aufweisen, deren Reflexionsvermögen in der von den Eingangswandlermitteln ($T_1$, $T_2$) wegführenden Richtung derart abnimmt, daß der mit der Wellenbahnlänge zunehmende Abfall der Wellenamplitude mindestens teilweise kompensiert wird.

7. Berührungsplattensystem nach Anspruch 4, 5 oder 6, dadurch gekennzeichnet, daß die genannte Zunahme des Reflexionsvermögens dadurch erzielt wird, daß in der reflektierenden Anordnung ($G_1$ in Figure 9) ausgewählte Elemente der Anordnung in einem in der von den Eingangswandlermitteln ($T_1$) wegführenden Richtung progressiv abnehmendem Anteil weggelassen sind.

8. Berührungsplattensystem nach Anspruch 4, 5 oder 6, dadurch gekennzeichnet, daß die reflektierende Anordnung ($G''_1$ in Figur 10a) Anordnungselemente aufweist, deren individuelle Länge in der von den Eingangswandlermitteln ($T_1$) wegführenden Richtung zunimmt und deren Orte in der Längsrichtung des jeweiligen Elements innerhalb der seitlichen Grenzen der Anordnung ($G''_1$) variieren.

9. Berührungsplattensystem nach Anspruch 1, 2 oder 3, dadurch gekennzeichnet, daß das System reflektierende Mittel (60) besitzt, die befähigt sind, von dem Oberflächenwellenburst abgeleitete Oberflächenwellenburstkomponenten auf der Substratoberfläche (16) auf der genannten Mehrzahl von Bahnen (Ph), die verschiedenen Stellen längs der Achse zugeordnet sind, zu den Eingangswandlermitteln (61) zurückzureflektieren.

10. Berührungsplattensystem nach Anspruch 9, dadurch gekennzeichnet, daß die Eingangs- und die Ausgangsoberflächenwandlermittel ($T_1$, $T_2$; $R_1$, $R_2$) ein Teil einer gemeinsamen Eingangs- und Ausgangswandlereinrichtung (61) sind.

11. Berührungsplattensystem nach Anspruch 1 oder 2 für die Verwendung mit einer Berührungsplatten-Winkelkoordinatenanzeigevorrichtung, dadurch gekennzeichnet, daß das System (10) zum Erkennen von auf einer Anzeigefläche (88, Figur 16) der Vorrichtung unter verschiedenen Winkeln angeordneten Berührungsstellen befähigt ist, daß die Eingangsoberflächenwellenwandlermittel (90) geeignet sind, einen Burst von kreisförmigen Oberflächenwellen auszusenden, die auf der Anzeigefläche (88) von dem scheinbaren Mittelpunkt des Koordinatensystems aus auswärts wandern, daß die Oberflächenwellenumlenkmittel (94) von dem Oberflächenwellenburst abgeleitete Oberflächenwellenburstkomponenten zu den Ausgangswandlermitteln (96) auf einer Mehrzahl von verschieden langen Bahnen umlenken, die unter verschiedenen Winkeln angeordneten Orten auf der Anzeigefläche (88) zugeordnet sind, und daß die Ausgangsschaltungsmittel (23) Mittel besitzen, die befähigt sind, durch eine der Laufzeit der erfaßten gestörten Wellenburstkomponente beruhende Analyse festzustellen, auf welcher Bahn der Mehrzahl von Bahnen die durch die Berührung beeinträchtigte Wellenburstkomponente gewandert ist und dadurch den Winkel zu bestimmen, unter dem der Ort der Berührung auf der Anzeigefläche (88) angeordnet ist.

**12.** Berührungsplattensystem nach einem der vorhergehenden Ansprüche, dadurch gekennzeichnet, daß die Ausgangsschaltungsmittel ein Steuersystem (110 in Figur 17a) besitzen, das ein Ausgangssignal ($S_3$, $S_4$) empfängt, das eine erste mit dem zeitlichen Verlauf der Welle in Beziehung stehende Kennlinie hat, die anzeigt, auf welcher Bahn der Mehrzahl von Bahnen (Ph, Pv) die durch die Berührung gestörte Wellenburstkomponente gewandert ist, und dadurch den Ort der Berührung der Oberfläche (16) auf der genannten Koordinatenachse bestimmt, daß das genannte Ausgangssignal ($S_3$, $S_4$) eine zweite Kennlinie hat, die die durch den Berührungsdruck bewirkte Dämpfung der genannten Wellenburstkomponente anzeigt, die sich auf der genannten Oberfläche (16) durch den Bereich der Berührung hindurch fortpflanzt, und daß das System (110) Erkennungsschaltungsmittel (122) aufweist, die das genannte Ausgangssignal ($S_3$, $S_4$) empfangen und entsprechend der ersten Kennlinie ein erstes Signal (174) entwickeln, das Information enthält, die den Ort der Berührung angibt, und entsprechend der zweiten Kennlinie ein zweites Signal (176) entwickeln, das Information enthält, die mehrere diskrete Nichtnullpegel des Berührungsdruckes oder ein Kontinuum von Berührungsdruckpegeln angibt.

**13.** Berührungsplattensystem nach Anspruch 12, dadurch gekennzeichnet, daß das Ausgangssignal ($S_3$, $S_4$) eine Signalpegel-Zeit-Kennlinie mit einer Einsattelung besitzt, deren Ort auf der Zeitachse die Laufzeit der erfaßten gedämpften Wellenburstkomponente angibt und deren Tiefe den Grad der Dämpfung der erfaßten gedämpften Wellenburstkomponente angibt, daß die Erkennungsschaltungsmittel (122) auf Grund der zeitlichen Lage der genannten Einsattelung in der Signalpegel-Zeit-Kennlinie des Ausgangssignals ($S_3$, $S_4$) das erste Signal (174) entwickeln, das den Ort der Berührung der genannten Oberfläche (16) längs der Koordinatenachse angibt, und daß die Erkennungsschaltungsmittel (122) ferner auf Grund der Tiefe der Einsattelung das zweite Signal (176) entwickeln, das den Grad der Dämpfung der akustischen Oberflächenwellen angibt, die sich auf der genannten Oberfläche (16) durch den Bereich der Berührung hindurch fortpflanzen.

**14.** Berührungsplattensystem nach Anspruch 2 oder 3, dadurch gekennzeichnet, daß das Steuersystem (110) mit dem Steuersystem (110) gekoppelte Mittel (160) zum Erzeugen einer die durch den Berührungsdruck bewirkten Störung anzeigenden elektrischen Amplitude aufweist, ferner Mittel (158), die befähigt sind, während einer Berührung der Vorrichtung (10) die Amplitude des gleichgerichteten Ausganges der Ausgangswandlermittel ($R_1$, $R_2$) an einer Mehrzahl von in zeitlichen Abständen voneinander angeordneten Stellen abzutasten und die abgetasteten Amplituden für eine spätere Bezugnahme zu speichern, danach die Amplitude des Ausganges der Ausgangswandlermittel ($R_1$, $R_2$) erneut abzutasten und die entwickelten berührungsabhängigen Amplitudenwerte mit den gespeicherten Bezugswerten zu vergleichen und ein erstes Steuersignal (174) zu entwickeln, das den Zeitpunkt des Auftretens der größten Differenz zwischen den Amplituden der Bezugswerte und der berührungsabhängigen Werte und damit den Zeitpunkt des Auftretens des durch die Berührung gestörten Wellenburstes darstellt, und das zweite Steuersignal (176) zu entwickeln, das den Betrag der genannten größten Differenz darstellt.

**15.** Berührungsplattensystem nach Anspruch 14, dadurch gekennzeichnet, daß das Steuersystem (110) Differenziermittel besitzt, die zum Differenzieren des Ausganges der Ausgangswandlermittel ($R_1$, $R_2$) geeignet sind, wobei der Nulldurchgang des so erhaltenen Signals den Zeitpunkt des Auftretens des durch die Berührung gestörten Wellenburstes angibt.

**16.** Berührungsplattensystem nach einem der vorhergehenden Ansprüche, dadurch gekennzeichnet, daß das Substrat (218, Figur 20) auf einer durchsichtigen ebenen Frontscheibe (216) einer Kathodenstrahlröhre (210) ausgebildet oder darauf aufgebracht ist, daß die Eingangs- und Ausgangsoberflächenwandlermittel ($T_1$, $T_2$; $R_1$, $R_2$) mit der Oberfläche (216) der Frontscheibe mechanisch und akustisch gekoppelt sind, und daß die reflektierende Anordnung ($G_1$ bis $G_4$) auf der Oberfläche (216) ausgebildet oder darauf aufgetragen ist und mit den Eingangswandlermitteln ($T_1$, $T_2$) zusammenwirkt.

**17.** Berührungsplattensystem nach einem der Ansprüche 1 bis 15 für die Verwendung zum Betätigen einer entfernt angeordneten, steuerbaren Vorrichtung, dadurch gekennzeichnet, daß das Substrat ein Graphiktablett (200, 317, 317') aufweist, das entfernt von der genannten Vorrichtung (319, 321) angeordnet, aber mit ihr durch eine geeignete Koppelung wirkungsverbunden ist.

**18.** Berührungsplattensystem nach Anspruch 17, dadurch gekennzeichnet, daß die steuerbare Vorrichtung ein Graphiksichtgerät (319) aufweist.

**19.** Berührungsplattensystem nach Anspruch 17 oder 18, dadurch gekennzeichnet, daß das Graphiktablett (200, 317, 317') von einer Glasscheibe gebildet wird.

FIG. 1

FIG. 3

FIG. 4

# FIG.2

EP 0 190 734 B1

FIG. 5

FIG. 6

FIG. 7

FIG. 8

FIG. 9

FIG. 10

FIG. 10a

FIG. 11

FIG. 12

FIG. 14

FIG. 15

FIG. 13

FIG. 16

FIG.17

FIG. 20

FIG. 17a

TO T1/T2 INPUT TRANSDUCERS

FROM R1/R2 OUTPUT TRANSDUCERS

EP 0 190 734 B1

FIG. 18

FIG. 19

FIG. 21a

FIG. 21b